(19) **Europäisches Patentamt / European Patent Office / Office européen des brevets**

(11) **EP 2 731 066 B1**

(12) **EUROPEAN PATENT SPECIFICATION**

(45) Date of publication and mention
of the grant of the patent:
**30.08.2017 Bulletin 2017/35**

(51) Int Cl.:
*G06F 21/88* (2013.01)   *G06Q 20/40* (2012.01)
*H04L 29/06* (2006.01)   *H04W 4/00* (2009.01)
*H04W 12/08* (2009.01)   *G06Q 20/32* (2012.01)
*G06F 21/35* (2013.01)   *G06Q 20/34* (2012.01)
*G07C 9/00* (2006.01)

(21) Application number: **13192328.6**

(22) Date of filing: **11.11.2013**

(54) **Electronic device and method for controlling payment function of input means**

Elektronische Vorrichtung und Verfahren zur Steuerung der Zahlungsfunktion von Eingabemitteln

Dispositif électronique et procédé pour commander une fonction de paiement de moyens d'entrée

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.11.2012 KR 20120127462**

(43) Date of publication of application:
**14.05.2014 Bulletin 2014/20**

(73) Proprietor: **Samsung Electronics Co., Ltd.
Gyeonggi-do 443-742 (KR)**

(72) Inventors:
 • **Cho, Chi-Hyun**
 **Gyeonggi-do (KR)**
 • **Kim, Moo-Young**
 **Seoul (KR)**
 • **Choi, Hyun-Chul**
 **Seoul (KR)**
 • **Heo, Chang Ryong**
 **Gyeonggi-do (KR)**

(74) Representative: **Nederlandsch Octrooibureau
P.O. Box 29720
2502 LS The Hague (NL)**

(56) References cited:
**WO-A1-2006/118122    WO-A2-2007/109574
KR-B1- 101 121 586    US-A- 5 942 985
US-A1- 2012 209 732    US-B1- 7 257 374**

 • **LING PEI ET AL: "An Inquiry-based Bluetooth indoor positioning approach for the Finnish pavilion at Shanghai World Expo 2010", POSITION LOCATION AND NAVIGATION SYMPOSIUM (PLANS), 2010 IEEE/ION, IEEE, PISCATAWAY, NJ, USA, 4 May 2010 (2010-05-04), pages 1002-1009, XP031707049, ISBN: 978-1-4244-5036-7**

Description

BACKGROUND

Field of the Disclosure

The present disclosure relates generally to an electronic device and a method for making payments using a handheld and/or mobile electronic device. More particularly, the present disclosure relates to controlling a payment function with a mobile electronic device.

Description of the Related Art

As the functionality of electronic devices advance over time, a single electronic device can now fulfill various functions that formerly required several separate devices. For example, the electronic device can make a call, conduct a game, Internet, and a camera function, and some devices can conduct a payment function using short-range communication.

However, a conventional electronic device having the payment function has a large size and volume. Thus, there is difficulty determining which part of a payment reader should be touched by the electronic device, and accordingly user convenience is deteriorated.

In this regard, there is a long-felt need for a method for facilitating the user's payment by adding the payment function to an input means used together with the electronic device. When the electronic device determines that the input means is lost, what is needed is a method for protecting user's important personal information by automatically deleting payment information stored in the input means or aborting the payment function so that someone does not unlawfully buy goods or services or receive payment when the input means is lost or stolen.

KR 101 121 586 B1 discloses a wireless mobile terminal comprising a locking control module wherein the locking control module comprises a distance determination unit wherein an authentication apparatus performs short-range communication with the wireless mobile terminal and wherein the authentication apparatus comprises a distance determination unit to detect the intensity of a reception signal received by communicating with the wireless mobile terminal, to measure a distance to the wireless mobile terminal on the basis of the intensity of the reception signal and that the authentication apparatus also comprises alarm means to perform alarming when the distance from the wireless mobile terminal becomes equal to or larger than a predetermined alarming distance.

US 2012/209732 A1 discloses a method and system for collecting access point information in linkage with a mobile card payment system to measure a location of a user using an access point of a wireless local area network (WLAN) service wherein the method include receiving payment information relating to a mobile communication terminal from a card company server, transmitting an access point information collecting control signal to the mobile communication terminal based on the payment information, receiving access point information collected by the mobile communication terminal in response to the control signal, and storing the received access point information in a storage means.

"An Inquiry-based Bluetooth indoor positioning approach for the Finnish pavilion at Shanghai World Expo 2010", by Ling Pei et al, Position location and navigation symposium (PLANS), 2010 1EEE/ION, Piscataway, NJ, USA, 4 May 2010, pages 1002-1009, ISBN: 978-1-4244-5036-7, discloses a Bluetooth indoor positioning approach with an inquiry-based solution, that uses Bluetooth access points to inquire the Bluetooth-enabled devices in range via RSSI probability distributions wherein a Welbull function is applied for approximating the Bluetooth signal strength distribution in the data training phase and the Histogram Maximum Likelihood position estimation based on Bayesian theory is utilized in the location determination phase.

US 7 257 374 B1 discloses a security system for wireless devices such as mobile phones including a wireless signal transmitter, and a signal strength detector and microprocessor associated with the wireless device being safeguarded wherein the microprocessor disables or locks the wireless device if the measurement by the detector of the strength of the signal transmitted by the wireless transmitter is less than a predetermined value, thereby indicating that there is more than a predetermined separation distance between the protected device and the transmitter, i.e., that, e.g., someone has taken the device, and wherein the disabled wireless device stays disabled until the measured signal strength is again greater than the predetermined value. Once this value is reached the device is automatically unlocked or enabled.

WO 2006/118122 A1 discloses an information leak preventing system by disabling use of information when divided information parts are at a predetermined distance or above wherein an information terminal can communicate with an authentication device by communication means such as radio or wire or infrared rays and wherein electronic information used in the system is divided into two or more parts and the divided data parts are stored in at least two of a divided information management server, the information terminal, and the authentication device. When the distance between the information terminal and the authentication device has become a predetermined value or above, at least one of the divided data parts stored is erased.

US 5 942 985 A discloses an automatic locking/unlocking device having a wireless lock device which includes a lock, a first memory for storing a lock controlling code, a first transmitter for transmitting a wireless transmission signal, a first receiver for receiving a wireless reception signal, a lock control circuit for generating a pilot signal by controlling the first transmitter, for comparing a lock access code included in the wireless reception signal with the lock controlling code when the wireless reception signal is received, releasing the locking function of the lock if the lock access code is identical to the lock controlling code, and locking the lock after a predetermined time has elapsed; and a wireless key device which includes a second memory for storing the lock access code, a second transmitter for transmitting the wireless reception signal, a second receiver for receiving the pilot signal, and a key control circuit for transmitting the lock access code when the pilot signal is received.

WO 2007/109574 A2 discloses methods and devices for automatically selecting which mobile communication device among two or more related mobile communication devices may establish communication or authorize a transaction for particular services or goods with an unrelated third communication device wherein a first mobile communication device detects the presence of a related second mobile communication device and authorizes a communication with a third unrelated entity, such as that of a vendor, based on the presence of the related second mobile communication device.

## SUMMARY

To address at least some of the above-discussed deficiencies, the present disclosure provides an operating method of an electronic device comprising receiving by the electronic device a packet periodically transmitted from an input means for inputting information to the electronic device, wherein the input means comprises a payment function, determining a distance from the electronic device to the input means based on comparing a value of signal reception strength of the received packet with values of signal reception strength in storage and extracting from storage a distance value that corresponds to a matching signal strength, and sending an acknowledgement (ACK) signal by the electronic device to the input means that includes at least one instruction when the distance value between the input means and the electronic device is within a predetermined range of distances extracted from storage, wherein the ACK signal sent by the electronic device comprises a payment lock instruction when the distance value extracted from storage is within the predetermined range from the electronic device to the input means, detecting that the input means is arranged at a preset position of the electronic device or accessed in a preset region of the electronic device, accessing the electronic device the input means via short-range communication, detecting by the electronic device that the input means locked a payment function, and sending to the input means a signal comprising an instruction to unlock the payment, wherein the accessing of the input means by the electronic device via short-range communication includes receiving by the electronic device the packet from the input means, analyzing ID information in the received packet, and confirming by the electronic device that the analyzed ID information matches ID information of the input means, and that the input means matches a preset input. Another aspect of the present disclosure provides an apparatus and a method for extracting a distance to an input means determined in real time and controlling a payment function of the input means according to the extracted distance to the input means, to thus guarantee user's privacy.

Yet another aspect of the present disclosure provides an apparatus and a method for counting the time starting from the communication range exit, out of a communication range of an electronic device, and autonomously locking operation of a payment function according to the counted time.

Still another aspect of the present disclosure provides an apparatus and a method for counting the time starting from a communication range exit when getting out of a communication an electronic device range, autonomously deleting payment information according to the counted time, and thus blocking access to a user's personal information.

In one non-limiting example, the short-range communication with the input means uses Bluetooth.

The packet periodically transmitted may be an advertisement packet that is transmitted by using, for example, Bluetooth.

The method may further include, for example, detecting that the input means deletes payment information; receiving user personal information to restore the payment information deleted by the input means; and when the received user personal information matches preset information, sending a signal to the input means comprising a transaction activation instruction.

According to another aspect of the present disclosure, a method of operating an input means includes periodically sending a packet to an electronic device; determining whether a signal corresponding to the transmitted packet is received by the electronic device; and controlling a payment function according to the signal reception wherein the method includes accessing the electronic device for short-range communication with the electronic device using Bluetooth, the accessing of the electronic device for the short-range communication with the electronic device using Bluetooth may include sending a packet comprising preset ID information to the electronic device; and receiving an ACK signal from the electronic device, the controlling of the payment function according to the signal reception may include, for example, when receiving the ACK signal from the electronic device, analyzing the received ACK signal; and when the analyzed ACK signal comprises a payment lock instruction, locking the payment function, wherein the method further includes detecting mount at a preset position of the electronic device, or access to a preset region of the electronic device; accessing the electronic device for the short-range communication with the electronic device; and receiving from the electronic device a message indicating match with a preset input means.

The packet being periodically transmitted may be an advertisement packet that is transmitted by using Bluetooth.

The determining of whether the signal corresponding to the transmitted packet is received from the electronic device may include determining whether an ACK signal corresponding to the transmitted packet is received from the electronic device within a preset time.

The controlling of the payment function according to the signal reception may include, for example, when not receiving the ACK signal from the electronic device, checking a preset payment control mode; and when the preset payment control mode is a first mode, deleting payment information stored.

The first mode may be a mode for controlling the payment function according to a distance of the input means to the electronic device.

The controlling of the payment function according to the signal reception may include when not receiving the ACK signal from the electronic device, checking a preset payment control mode; when the preset payment control mode is a second mode, counting a time from when the ACK signal is not received; and controlling the payment function according to the counted time from when the ACK signal is not received.

The second mode may be, for example, a mode for counting the time from when the ACK signal is not received from the electronic device, and controlling the payment function as a preset time passes based on the counted time from when the ACK signal is not received.

The controlling of the payment function according to the counted time may include when the counted time is greater than or equal to a first preset time and smaller than a second preset time, locking the payment function.

The controlling of the payment function according to the counted time may include when the counted time is greater than or equal to the preset second time, deleting payment information stored.

The accessing of the electronic device for the short-range communication with the electronic device using Bluetooth may include, for example, sending a packet comprising ID information to the electronic device; and receiving the ACK signal from the electronic device.

The method may further include receiving a signal from the electronic device comprising an instruction to unlock the payment

The method may further include inputting user personal information provided to the electronic device for restoring the deleted payment information; and receiving a signal comprising a transaction activation instruction from the electronic device.

According to yet another aspect of the present disclosure, an electronic device includes a communication module including a transceiver for receiving a packet periodically transmitted from an input means, and for sending to the input means a signal according to an extracted distance of the input means and the received packet; and a processor unit for extracting information corresponding to a distance from the electronic device to the input means based on a signal reception strength of the packet, detecting that the input means is arranged at a preset position of the electronic device or accessed in a preset region of the electronic device, accessing the input means via short-range communication, detecting that the input means locked a payment function, and sending to the input means a signal comprising an instruction to unlock the payment, wherein the access of the input means via short-range communication includes receiving by the electronic device the packet from the input means, analyzing ID information in the received packet, and confirming that the analyzed ID information matches ID information of the input means, and that the input means matches a preset input means, and wherein the signal transmitted by the communication module comprises a payment lock instruction when the distance value extracted from storage exceeds a preset distance from the electronic device (1600) to the input means.

The communication module may communicate with the input means for short-range communication using Bluetooth.

The packet periodically transmitted may be an advertisement packet transmitted by using Bluetooth.

The processor unit may analyze the signal reception strength of the packet, fetch information from storage which may comprise a table which arranges distances from the electronic device to the input means based on the signal reception strength, and extracts from the table a distance to the input means by comparing the analyzed signal reception strength with values of the table.

The processor unit may check a preset distance which is the distance from the electronic device to the input means, and determine whether the extracted distance of the input means from the electronic device falls within the preset distance. When the extracted distance from the electronic device to the input means exceeds the preset distance, the communication module may send the signal comprising a payment lock instruction to the input means.

When the extracted distance of the input means falls within the preset distance, the communication module may send an ACK signal associated with the packet received from the input means, using the signal to send to the input means.

The processor unit may receive the packet from the input means, analyze ID information in the received packet, and confirm that the analyzed ID information matches ID information of the input means and that the input means matches a preset input means, and the communication module may send an ACK signal to the input means.

The processor unit may detect that the input means has locked a payment function, and the communication module may send a signal to the input means comprising an instruction to unlock the payment.

The processor unit may detect in the case where the input means deletes payment information, and the electronic device may further include a touch screen for receiving user personal information to restore the payment information deleted by the input means. When the received user personal information matches preset information, the communication module may send a signal to the input means comprising a transaction activation instruction.

According to still another aspect of the present disclosure, an input means includes a communication module including a transceiver for periodically sending a packet to an electronic device; and a controller for determining whether a signal corresponding to the transmitted packet is received from the electronic device, and controlling a payment function according to the signal reception wherein the communication module of the input means may communicate with the electronic device for short-range communication with the electronic device using Bluetooth, the communication module may transmit a packet comprising preset ID information to the electronic device, and in response receive an ACK signal from the electronic device, the controlling of the payment function according to the signal reception may include, for example, when receiving the ACK signal from the electronic device, analyzing the received ACK signal; and when the analyzed ACK signal comprises a payment lock instruction, locking the payment function, wherein the controller is further arranged for detecting mount at a preset position of the electronic device, or access to a preset region of the electronic device; accessing the electronic device for the short-range communication with the electronic device; and receiving from the electronic device a message indicating match with a preset input means. The packet periodically transmitted may be an advertisement packet transmitted by using Bluetooth.

The controller of the input means may determine whether an ACK signal corresponding to the transmitted packet is received from the electronic device within a preset time.

When not receiving the ACK signal from the electronic device, the controller of the input means may check a preset payment control mode. When the preset payment control mode is a first mode, the controller may delete payment information stored.

The first mode may be a mode for controlling the payment information according to a distance from the input means to the electronic device.

When not receiving the ACK signal from the electronic device, the controller may check a preset payment control mode, when the preset payment control mode is a second mode, count a time from when the ACK signal is not received, and control the payment function according to the counted time.

The second mode may be a mode, for example, for counting the time from when the ACK signal is not received from the electronic device and controlling the payment function as a preset time passes.

When the counted time is greater than or equal to a first preset time and smaller than a second preset time, the controller of the input means may lock the payment function.

When the counted time is greater than or equal to the second preset time, the controller of the input means may delete payment information stored.

In addition, the controller of the input means may detect being mounted at a preset position of the electronic device, or access to a preset region of the electronic device, and the communication module may communicate with the electronic device for the short-range communication with the electronic device using Bluetooth, and receive a message from the electronic device indicating a match with a preset input means.

The communication module may periodically transmit a packet to the electronic device, transmit a packet comprising ID information to the electronic device, and receive the ACK signal from the electronic device.

The communication module may receive a signal from the electronic device comprising an instruction for the input means to unlock the payment.

The input means may further include an input part for inputting personal user information to the electronic device so that the input means can receive authorization to restore the deleted payment information. The communication module may receive a signal comprising a transaction activation instruction from the electronic device to activate the payment function of the input means.

In accordance with yet another aspect of the present invention, an operating method of an electronic device is provided. The method comprises receiving a packet periodically transmitted from an input means; determining a distance from the electronic device to the input means based on a received signal strength of the packet; and transmitting to the input means a signal according to the determined distance of the electronic device from the input means and the received packet.

In accordance with yet another aspect of the present invention, an electronic device is provided. The device comprises a communication module comprising a transmitter configured to receive a packet transmitted from an input means; and a processor unit configured to control to determine a distance from the electronic device to the input means based on a signal strength of the packet, determine whether the determined distance is within a threshold distance, and, if the determined distance exceeds the threshold distance, to transmit an instruction to the input means to lock the payment function in the input means.

Other aspects, advantages, and salient features of the disclosure will become apparent to those skilled in the art from the following detailed description, which, taken in conjunction with the annexed drawings, discloses exemplary embodiments of the disclosure.

## BRIEF DESCRIPTION OF THE DRAWINGS

The above and other aspects, features, and advantages of certain exemplary embodiments of the Electronic Device and Method For Controlling a Payment Function of an Input Means will become more apparent from the following description taken in conjunction with the accompanying drawings, in which:

FIG. 1 illustrates an electronic device for controlling a payment function of an input means according to an exemplary embodiment of the present disclosure;
FIG. 2 illustrates interconnection of an electronic device and an input means according to an exemplary embodiment of the present disclosure;
FIG. 3 illustrates the electronic device for extracting from storage such as a table a distance from the electronic device to the input means according to an exemplary embodiment of the present disclosure;
FIGs. 4A, 4B and 4C illustrate selecting a permissible distance setting between the electronic device and the input means for operation according to an exemplary embodiment of the present disclosure;
FIGs. 5A, 5B, 5C and 5D illustrate time inputs for controlling a payment function of the input means according to an exemplary embodiment of the present disclosure;
FIG. 6A, 6B, 6C and 6D illustrate a condition input to determine whether the input means is lost according to an exemplary embodiment of the present disclosure;
FIG. 7 illustrates the payment function control in a first mode according to an exemplary embodiment of the present disclosure;
FIG. 8 illustrates the payment function control in a second mode according to an exemplary embodiment of the present disclosure;
FIGs. 9A, 9B, 9C and 9D illustrates the payment function of the input means displayed as an icon in a particular region of the electronic device according to an exemplary embodiment of the present disclosure;
FIGs. 10A and 10B illustrate the input means returning to a payable status according to an exemplary embodiment of the present disclosure;
FIG. 11 is a flowchart illustrating exemplary operations of the electronic device according to an exemplary embodiment of the present disclosure;
FIGs. 12A and 12B are flowcharts illustrating exemplary operations of the input means according to an exemplary embodiment of the present disclosure;
FIG. 13A is a flowchart illustrating exemplary operations of the electronic device according to an exemplary embodiment of the present disclosure;
FIG. 13B is a flowchart illustrating the electronic device according to an exemplary embodiment of the present disclosure;
FIG. 14A is a flowchart illustrating exemplary operations of the input means according to an exemplary embodiment of the present disclosure;
FIG. 14B illustrates the input means according to an exemplary embodiment of the present disclosure;
FIG. 15 is a diagram of the electronic device according to an exemplary embodiment of the present disclosure;
FIG. 16 illustrates the electronic device according to an exemplary embodiment of the present disclosure; and
FIG. 17 illustrates structural elements of the input means.

Throughout the drawings, like reference numerals will be understood to refer to like parts, components and structures.

## DETAILED DESCRIPTION

The following description with reference to the accompanying drawings is provided to assist in a comprehensive understanding of exemplary embodiments of the disclosure as defined by the claims and their equivalents. The description includes various specific details to assist a person of ordinary skill in the art in that understanding but these specific details are to be regarded as merely illustrative, exemplary and non-limiting of the appended claims. Accordingly, those of ordinary skill in the art will recognize that various changes and modifications of the embodiments described herein can be made without departing from the scope of the disclosure. In addition, descriptions of well-known functions and constructions may be omitted for clarity and conciseness when their inclusion might obscure appreciation of the disclosure by a person of ordinary skill in the art.

The terms and words used in the following description and claims are not limited to the bibliographical meanings, but, are merely used by the inventor to enable a clear and consistent understanding of the disclosure. Accordingly, it should be apparent to those skilled in the art that the following description of exemplary embodiments of the present disclosure is provided for illustrative purposes only and not for the purpose of limiting the disclosure as defined by the appended claims and their equivalents.

It is to be understood that as used herein the singular forms "a," "an," and "the" include plural referents unless the context clearly dictates otherwise. Thus, for example, reference to "a component surface" includes reference to one or more of such surfaces.

By the term "substantially" it is to be understood as used herein that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

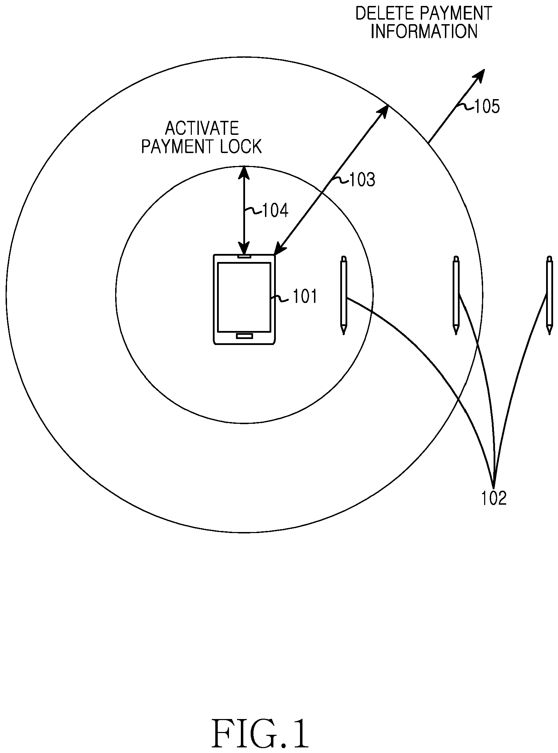

FIG. 1 depicts an electronic device for controlling a payment function performed by an input means according to an exemplary embodiment of the present disclosure. As shown in FIG. 1, the present disclosure can include an electronic device 101 and an input means 102 for inputting information to the electronic device 101. The electronic device 101 can send and receive information to and from the input means 102 using short-range communication, including but not limited to Bluetooth Low Energy (BLE). For example, the claims of the present disclosure can be practiced using other protocols of short range communication, such as 802.11, Wibro, WiMax, and NFC, just to name some non-limiting possibilities. Herein in this particular aspect, when using Bluetooth the short-range communication with the BLE allows the electronic device 101 to communicate with low power even in a deep-sleep mode. In detail, even when the electronic device 101 is in the deep-sleep mode, a sensor hub interconnected between a communication module and an application processor of the electronic device 101 operates with the low power. Upon receiving a wake-up signal from the communication module, the sensor hub can forward the received signal to the application processor to activate the application processor. Hence, the electronic device 101 can perform the short-range communication with the input means 102 using the BLE and thus reduce consumption of battery power.

The electronic device 101 conducts the short-range communication with the input means 102 using the BLE in order to control a payment function of the input means 102. First, the electronic device 101 can periodically receive an advertisement packet transmitted from the input means 102 at preset time intervals and thus use the received packet to detect a distance from the electronic device 101 to the input means 102 in real time. More specifically, the electronic device 101 can store data that correlates the distances from the electronic device to the input means based on a packet reception strength. Such data can be stored in a table where the various signal strengths and distance of comparison data is used to determine a distance between the electronic device and the input means by comparing similar signal strength stored in the table.

Upon receiving transmission of the advertisement packet from the input means 102, the electronic device 101 can analyze and compare the packet reception strength with the stored table values, and thus extract from the table a correlated determination of the distance of the input means 102 and the electronic device 101. When the distance from the electronic device to the input means 102 extracted from the storage table by the electronic device 101 falls within a communication range, the electronic device 101 can send an ACK signal to the input means corresponding to receipt of the advertisement packet. This ACK signifies that the electronic device 101 and the input means 102 are within the communication range 103 (shown in FIG. 1). Likewise, as the input means 102 receives the ACK signal corresponding to the advertisement packet from the electronic device 101, such receipt of the ACK signal signifies that the electronic device 101 does not interrupt the payment function at all. In other words, the input means 102 can conduct the payment by sending and receiving payment information to and from a payment reader.

When locating the input means 102 outside a preset distance 104, the electronic device 101 can send a signal to the input means 102 that includes a payment lock instruction. More specifically, when analyzing the advertisement packet signal received from the input means 102 and locating the input means 102 inside the communication range 103 but out of the preset distance 104, the electronic device 101 can send the signal including the payment lock instruction to the input means 102. Herein, the payment lock function can disable the payment function of the input means 102. More specifically, although the electronic device 101 and the input means 102 are in the communication range 103 to allow the payment function of the input means 102, when the input means 102 is outside the preset distance 104 from the electronic device 101, the electronic device 101 can send the ACK signal including the payment lock instruction to the input means 102.

For example, it is assumed that the distance between the electronic device 101 and the input means 102 is set to 10m and the communication range 103 of the electronic device 101 and the input means 102 is set to 50m. When the distance to the input means 102 extracted by the electronic device 101 is 25m, the electronic device 101 can determine that the input means 102 is lost at a short distance. Hence, the electronic device 101 can send the ACK signal including the payment lock instruction to the input means 102. Namely, the present disclosure addresses misuse of the input means 102 by a third party outside the preset distance 104.

The input means 102 can input certain information to the electronic device 101 and perform the payment by sending and receiving the payment information to and from the payment reader. In detail, the input means 102 can not only input certain information to the electronic device 101 but also perform the payment by sending and receiving the payment information to and from the payment reader based on user's payment information which is required for the payment and stored in the input means 102. A conventional input means is used merely as a means for inputting information to the electronic device. Naturally, the electronic device stores user's information and conducts the payment by sending and receiving the payment information to and from the payment reader. In recent, as the size and the volume of the electronic device increase, the user is confused about exactly which part of the electronic device needs to contact the payment reader in order to make the payment using the short-range communication. By contrast, the present disclosure stores necessary information for the payment to the input means 102, and the user can easily make the payment by bringing the input means 102 close to the payment reader.

In addition, the input means 102 periodically sends the packet to the electronic device 101 at the preset time intervals. Herein, the packet periodically transmitted by the input means 102 to the electronic device 101 at the preset time intervals can be the advertisement packet using the BLE. In more detail, since the input means 102 periodically sends the advertisement packet using the BLE at the preset time intervals, the input means 102 consumes the low power to send the advertisement packet and thus reduces the power consumption. Next, the input means 102 can determine whether the signal corresponding to the packet is received from the electronic device 101. More specifically, the input means 102 can determine whether the ACK signal corresponding to the transmitted advertisement packet is received from the electronic device within a preset time.

Next, the input means 102 can control the payment function according to the signal reception. In detail, the input means 102 can control the payment function according to the ACK signal reception from the electronic device 101 in response to the advertisement packet. Upon receiving the ACK signal from the electronic device 101, the input means 102 can analyze the ACK signal received from the electronic device 101. Next, the input means 102 can execute the payment lock function when the analyzed ACK signal includes the payment lock instruction. Hence, the input means 102 cannot perform the payment function by sending and receiving the payment information to and from the payment reader. That is, although the input means 102 is placed inside the communication range 103 of the electronic device 101, the user of the electronic device 101 can determine that the input means 102 is lost at a short distance.

For example, with continued reference to FIG. 1, the distance between the electronic device 101 and the input means 102 can be set to 5m and the communication range 103 of the electronic device 101 and the input means 102 is set to 50m. When the input means 102 is placed 45m away from the electronic device 101, the input means 102 falls inside the communication range 103. However, since the distance is set to 5m, the electronic device 101 can determine that the input means 102 is missing at the short distance. Thus, the input means 102 can receive the ACK signal from the electronic device 101 including the payment lock instruction from the electronic device 101 and thus lock the payment function. In other words, when the input means 102 is placed/left/taken outside the preset distance 104, the potential misuse of the input means 102 by the third party can be addressed. In addition, locking the payment function of the input means 102 outside the preset distance 104 but within the distance of range 103 may be desirable as a security precaution.

When not receiving the ACK signal from the electronic device 101, the input means 102 can check a payment control mode. In detail, when receiving no ACK signal corresponding to the advertisement packet from the electronic device 101, the input means 102 can check the payment control mode which can be set to a first mode or a second mode. When the payment control mode is set to the first mode, the input means 102 can delete the stored payment information. Herein, the first mode can control the payment function according to the distance between the electronic device 101 and the input means 102. More specifically, when the input means 102 is in a communication range 105 of the electronic device 101, the input means 102 cannot receive the ACK signal corresponding to the advertisement packet, which is sent to the input means 102, from the electronic device 101. In other words, when the input means 102 is in the communication range 105 of the electronic device 101, the input means 102 can autonomously determine that the input means 102 is missing from the electronic device 101 based on the long distance. Hence, the input means 102 can autonomously delete its stored payment information. This deletion of the stored payment information prevents someone from utilizing the input means 102 to use payments without authorization. When the input means 102 continues the payment function without deleting the stored payment information, any third party obtaining the input means 102 can make the payment. To prevent such illegal payment, the input means 102 can delete the payment information.

When the payment control mode is set to the second mode, the input means 102 can count the time starting from, for example, transmitting to the electronic device and no ACK signal being received and controlling the payment function according to the counted time. Herein, the second mode can count the time starting from no ACK signal received (that can start, for example, from an expected time after a transmission that an ACK is typically received, or from the time the transmission is finished, or some other designated period there between for example) at the input means 102 from the electronic device 101, and control the payment function as the preset time passes. More specifically, when the time counted from "no ACK signal received" at the input means 102 from the electronic device 101 exceeds a first time, the input means 102 can conduct the payment lock function. When the time counted from no ACK signal received at the input means 102 from the electronic device 101 exceeds a second time, the input means 102 can delete the stored payment information. For example, when the time counted from no ACK signal received at the input means 102 from the electronic device 101 exceeds the first time, the input means 102 can determine a "short-term missing" status and lock the payment. Likewise, when the time counted from no ACK signal received at the input means 102 from the electronic device 101 exceeds the second time, the input means 102 can determine there is a "long-term missing" status and delete the stored payment information. In other words, when the input means 102 determines the status as being at least one of short-term and long-term missing, the present disclosure locks the payment function of the input means and can delete the stored payment information, depending on a respective status being short term missing or long term missing, or according to user changeable default, so as to prevent the third party obtaining the input means 102 from making the payment.

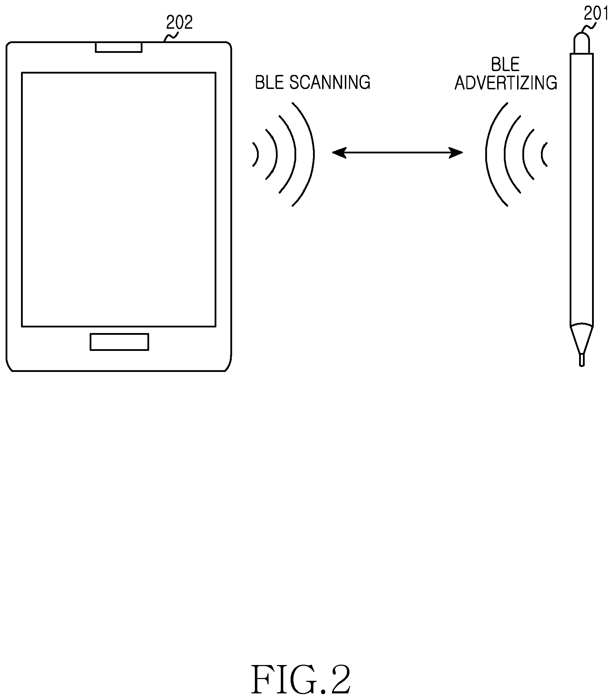

FIG. 2 depicts an interconnection of an electronic device and an input means according to an exemplary embodiment of the present disclosure. As shown in FIG. 2, an input means 201 accesses (communicates with) an electronic device 202 for the short-range communication using the BLE. First of all, the input means 201 can send a packet including its ID information to the electronic device 202. Next, the electronic device 202 receives the packet including the ID information of the input means 201 from the input means 201 and analyzes the ID information of the received packet. Next, the electronic device 202 can confirm that the analyzed ID information matches the ID information of the input means 201 that is already known, and for example, retrieved from storage for comparison, for example, by a controller. When the analyzed ID information matches the ID information of the input means 201, the electronic device 202 can send an ACK signal to the input means 201. When the input means 201 receives the ACK signal from the electronic device 202, the connection between the electronic device 202 and the input means 201 for the short-range communication can be completed.

Next, the input means 201 can periodically transmit the same packet (or different packets) to the electronic device 202 at the preset time intervals. Herein, the packet periodically transmitted by the input means 201 to the electronic device 202 at the preset time intervals can be the advertisement packet using the BLE, as one possible example. In more detail, since the input means 201 periodically sends the advertisement packet using the BLE to the electronic device 202 at the preset time intervals, the input means 201 consumes the low power to send the advertisement packet and thus reduces the power consumption. The electronic device 202 can scan the packet periodically received from the input means 201. In other words, the electronic device 202 can send and receive information to and from the input means 201 through the short-range communication using the BLE. Herein, the short-range communication using the BLE can indicate the low-power communication even in the deep-sleep mode of the electronic device 202. More specifically, even when the electronic device 202 is in the deep-sleep mode, the sensor hub interconnected between the communication module and the application processor of the electronic device 202 operates with the low power. Upon receiving the wake-up signal from the communication module, the sensor hub can forward the received signal to the application processor to activate the application processor. Hence, the electronic device 202 can perform the short-range communication with the input means 201 using the BLE and thus reduce the power consumption of the battery.

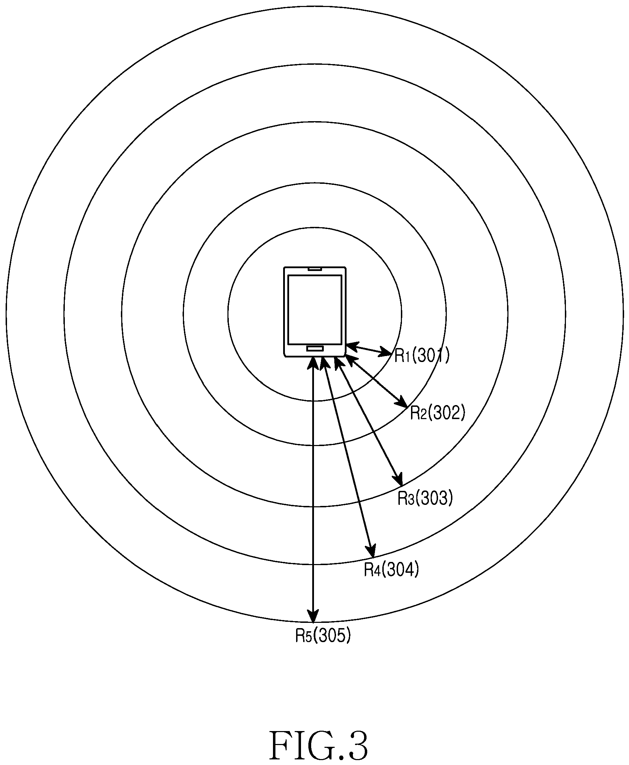

FIG. 3 depicts the electronic device for extracting the distance to the input means according to an exemplary embodiment of the present disclosure. The electronic device can store a table which arranges the distances to the input means based on the reception strength. In more detail, a controller of the electronic device can analyze an index region of the packet received from the input means, and then determine the distance to the input means by determining whether or not the packet is compromised. In other words, the electronic device can store in advance the table for extracting the distance to the input means based on the packet reception strength from the input means.

Table 1 shows the table stored in the electronic device.

Table 1

| RSSI | Estimation distance |
|---|---|
| over -90dBm | BLE link loss |
| -80dBm | R5 |
| -70dBm | R4 |
| -60dBm | R3 |
| -50dBm | R2 |

(continued)

| RSSI | Estimation distance |
|------|---------------------|
| -40dBm | R1 |

The Received Signal Strength Indication (RSSI) can indicate the signal reception strength, and BLE link loss can indicate the short-range communication range of the electronic device and the input means using the BLE.

For example, when the electronic device analyzes the packet received from the input means and determines the reception strength of the received packet as being -40 decibels above 1 milliwatt (dBm), the electronic device can confirm that the input means is placed at a distance R1 301 away from the electronic device.

Moreover, when the electronic device analyzes the packet received from the input means and determines the reception strength of the received packet as being -50 dBm, the electronic device can confirm that the input means is placed at a distance R2 302 away from the electronic device.

In addition, when the electronic device analyzes the packet received from the input means and determines the reception strength of the received packet as being -60 dBm, the electronic device can confirm that the input means is placed at a distance R3 303 away from the electronic device.

With further reference to FIG. 3, when the electronic device analyzes the packet received from the input means and determines the reception strength of the received packet as being -70 dBm, the electronic device can confirm that the input means is placed at a distance R4 304 away from the electronic device.

Similarly, when the electronic device analyzes the packet received from the input means and determines the reception strength of the received packet as being -80 dBm, the electronic device can confirm that the input means is placed at a distance R5 305 away from the electronic device. By contrast, when the electronic device analyzes the packet received from the input means and determines the reception strength of the received packet as being -90 dBm, the electronic device can confirm that the input means is out of the short-communication range. That is, the electronic device can pre-store the table of Table 1.

Next, the electronic device can analyze the packet periodically received from the input means at the preset time intervals and thus extract the distance to the input means. In detail, the electronic device can analyze the reception strength of the packet from the input means and extracts the distance from the electronic device to the input means by fetching data , such as fetching the table stored therein and comparing the analyzed signal reception strength with the values of the table. For example, the electronic device is assumed to store the table of Table 1.

When the electronic device analyzes the packet reception strength from the input means and determines the reception strength of the received packet as being -70 dBm, the electronic device can confirm that the input means is placed at the distance R4 304 away from the electronic device. More particularly, since the R4 304 falls within the short-range communication range of the electronic device and the input means, the electronic device can send the ACK signal corresponding to the received packet to the input means. Accordingly, the input means receiving the ACK signal can conduct the payment function with the payment reader.

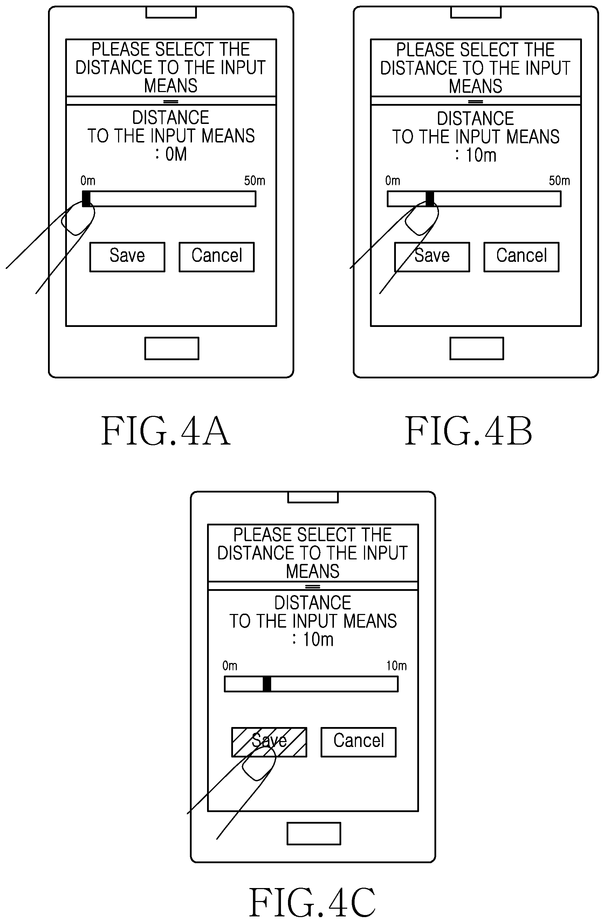

FIG. 4 depicts the distance setting between the electronic device and the input means according to an exemplary embodiment of the present disclosure. Herein, the distance between the electronic device and the input means can be defined within the communication range of the electronic device and the input means. The distance between the electronic device and the input means is set and can be set to other values in order to prevent the short-distance loss of the input means. More specifically, even when the distance of the input means from the electronic device falls within the communication range of the electronic device, the user can prepare for the short-distance loss of the input means by setting the distance between the electronic device and the input means.

For example, it is assumed that a house of the user possessing the electronic device and the input means and a convenient store are placed in 10m. The user is assumed to carry only the input means for the payment and go to the convenient store in order to purchase necessary goods while leaving the electronic device at home. The electronic device is assumed to receive an instruction for setting the distance to the input means and to determine the distance of the input means as 15m. That is, since the user carries only the input means and does not stop at any other place, the user sets the distance of the input means to 15m within the distance of the convenience store in the electronic device to prepare for the input means loss. In this example, the input means can complete the payment by sending and receiving the payment information to and from a payment reader of the convenience store.

However, in the event that the user purchases his/her required goods in the convenience store, but then encounters his/her friend on the way back home, and converses with the friend in a coffee shop or a tavern outside the preset distance of 15m. The user then returns to his/her home without noticing that the input means accidentally slips out of his/her pocket and then the user falls asleep without recognizing the loss of the input means. In this case, although the third party finds the input means, the input means has received the payment lock instruction from the electronic device and locked the payment function the moment the input means was beyond the preset distance of 15m. As a result, the third party cannot make unauthorized purchases with the obtained input means. On other words, the input means is separated from the electronic device and is thus prone to be lost. Hence, when the electronic device receives the preset distance and determines that the input means is out of the preset distance from the electronic device, the electronic device can send the payment lock instruction so as to disable the payment function with the input means. This payment lock instruction blocks the third party obtaining the input means from misusing the input means because the input means contains the user's personal information for the payment.

FIGS. 4A, 4B, and 4C depict examples of selecting the input means distance from the electronic device at, for example 0M and 10M. When receiving the instruction for setting the distance to the input means, the electronic device can conduct a User Interface (UI) for setting the distance to the input means as shown in FIG. 4A.

More specifically, the electronic device can display a control bar for inputting the distance of the input means together with a guide message such as "Please select the distance to the input means" on a touch screen. Next, the electronic device can display the distance to the input means according to the selection of the control bar on the touch screen as shown in FIG. 4B. For example, the electronic device can display the distance of the input means according to the movement of the control bar, together with a message "Distance to the input means : 10m" on the touch screen. Next, the electronic device can store the input distance of the input means when a region for storing the distance of the input means is selected as shown in FIG. 4C by touch or near-touch of the device display.

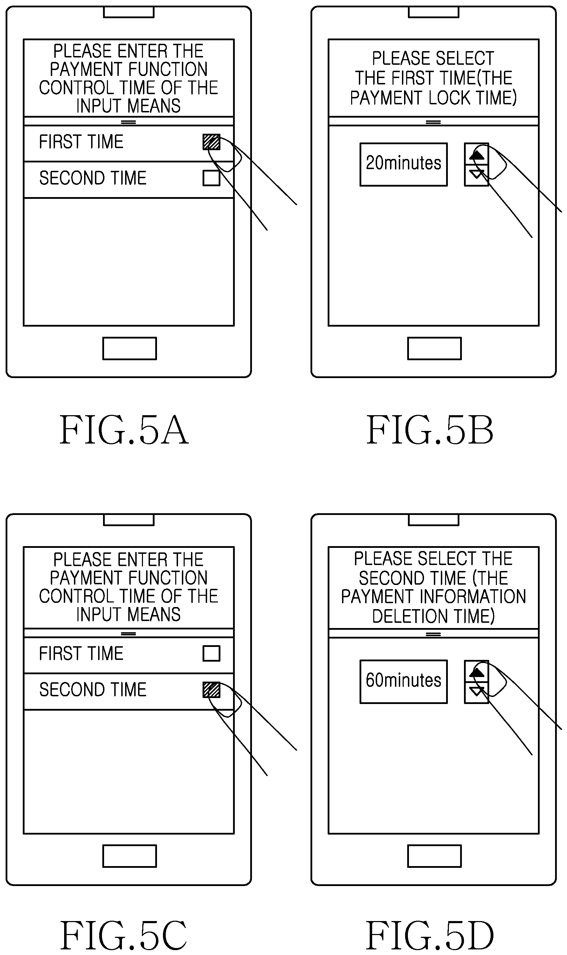

FIGs. 5A, 5B, 5C and 5D depicts the time input for controlling the payment function of the input means according to an exemplary embodiment of the present disclosure, such as setting the "first time" and the "second time".

Herein, the time for controlling the payment function of the input means indicates the time counted when the electronic device and the input means leave the short-range communication range, and includes a first time and a second time. More specifically, the input means receives the ACK signal of the periodic packet from the electronic device. When not receiving the ACK signal of the packet from the electronic device, the input means can confirm that the distance from the electronic device exceeds the communication range. In other words, the input means can receive a setting of the first time and the second time, count the time when the input means gets out of the communication from of the electronic device, and thus prepare for the short-term and long-term loss.

For example, it is assumed that the first time for controlling the payment function of the input means is set as 20 minutes and the second time is set as 60 minutes in the electronic device (Note these period of minutes may be changeable default values). It is also assumed that the communication range of the electronic device and the input means is 50m, and the electronic device enters the mode for controlling the payment function of the input means by counting the time from the out-of-communication-range of the input means. In this case, the input means can periodically send the packet to the electronic device within the communication range 50m, and receive the ACK signal of the transmitted packet. However, when the input means gets out of 50m away from the electronic device, the input means cannot receive the ACK signal of the packet from the electronic device. When not receiving the ACK signal of the packet from the electronic device within a preset time, the input means, for example, can determine the out-of-communication-range and count the time. Next, when the counted time exceeds the first time of 20 minutes, the input means can lock and disable the payment function, as this is the action associated with exceeding the first time. When the counted time exceeds the second time of 60 minutes, the input means can determine the loss to be "the long-term loss" and delete the stored payment function in order to prevent the unauthorized access of the user's personal information.

FIGS. 5A, 5B, 5C and 5D depict the time input for controlling the payment function of the input means.

For example, as shown in FIG. 5A, when receiving the instruction for setting the time for controlling the payment function of the input means, the electronic device can execute the UI for controlling the payment function of the input means as shown.

More specifically, the electronic device can display a region for inputting the first time and a region for inputting the second time so as to input either the first time or the second time, together with a guide message such as "Please select the time for controlling the payment function of the input means" on the touch screen. As shown in FIGs. 5A and 5B, when the region for inputting the first time is touched, the electronic device can display a control key for specifying the first time together with a guide message "Please select the first time" on the touch screen as shown in FIGS. 5A and 5B.

Similarly, with reference to FIGs. 5C and 5D, when the region for inputting the second time is touched, the electronic device can display a control key for specifying the second time together with a guide message "Please select the second time" on the touch screen as shown. That is, the electronic device can display the UI for inputting the first time and the second time to receive the first time and the second time from the user.

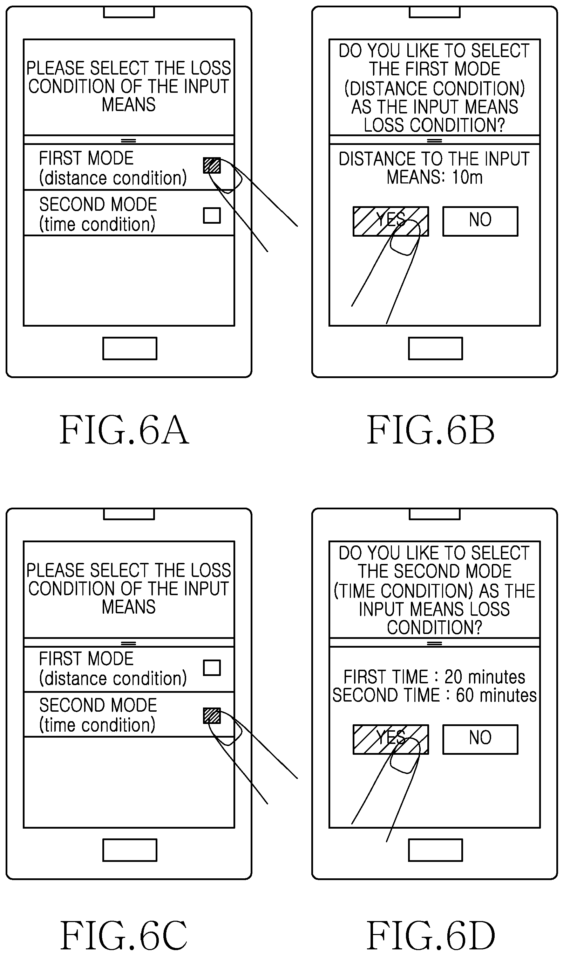

FIG. 6A, 6B, 6C, and 6D depict selecting a loss condition input to determine whether the input means is missing according to an exemplary embodiment of the present disclosure.

As shown in FIGS. 6A and 6B, the electronic device can receive an instruction for selecting the loss condition of the input means and display a guide message for selecting the loss condition of the input means on the touch screen. More specifically, the electronic device can display a region for inputting the first mode conditions and a region for inputting the second mode conditions in order to select either the first mode or the second mode, together with a guide message for selecting the input means loss condition. When the region for inputting the first mode is touched, the electronic device can display a message inquiring about the user selection of the preset input means distance and the first mode. For example, when the distance to the input means stored in the electronic device is 10m, the electronic device can display the message for confirming the first mode together with a guide message "the selected distance to the input means : 10m" on the touch screen. Next, when receiving an instruction for selecting the first mode, the electronic device can store the first mode as the input means loss condition.

Likewise, as shown in FIGS. 6C and 6D, the electronic device can receive the instruction for selecting the loss condition of the input means and display the guide message for selecting the loss condition of the input means on the touch screen. More specifically, the electronic device can display the region for inputting the first mode conditions and the region for inputting the second mode conditions in order to select either the first mode or the second mode, together with the guide message for selecting the input means loss condition. When the region for inputting the second mode is touched, the electronic device can display a message inquiring about the first and second preset times and the second mode. For example, when the first time and the second time stored in the electronic device are 20 minutes and 60 minutes respectively, the electronic device can display the message for confirming the second mode together with a guide message "the selected first time : 20 minutes, the selected second time : 60 minutes" on the touch screen. Next, when receiving an instruction for selecting the second mode, the electronic device can store the second mode as the input means loss condition.

While either the first mode or the second mode is selected and stored as the input means loss condition, the electronic device can select and apply conditions of both of the first mode and the second mode. In more detail, the electronic device can concurrently receive the distance condition and the time condition. When the input means satisfies the distance condition and the time condition, the related functions can be fulfilled.

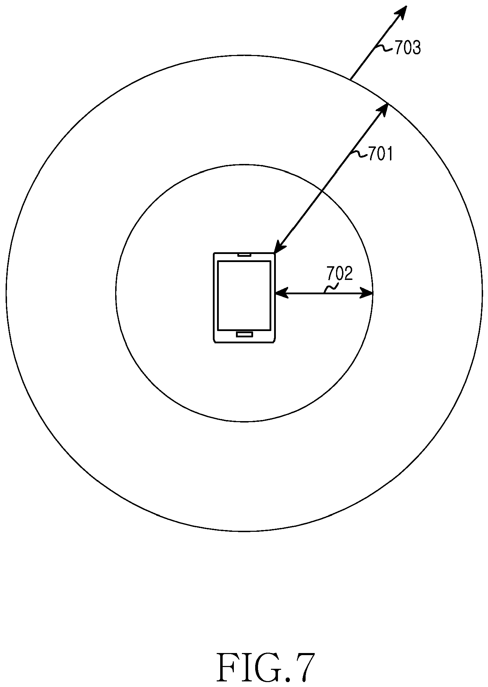

FIG. 7 depicts an illustration of the payment function control in the first mode according to an exemplary embodiment of the present disclosure. The input means can periodically send a packet to the electronic device at the preset time intervals. Herein, the packet periodically transmitted by the input means to the electronic device at the preset time intervals can be an advertisement packet using the BLE. In more detail, since the input means periodically sends the advertisement packet to the electronic device using the BLE at the preset time intervals, the input means consumes the low power to send the advertisement packet and thus reduces the consumption of power. The electronic device can scan the packet periodically received from the input means. In other words, the electronic device can send and receive information to and from the input means through the short-range communication using the BLE. Herein, the short-range communication using the BLE can indicate the low-power communication even in the "deep-sleep" mode of the electronic device. More specifically, even when the electronic device is in the deep-sleep mode, the sensor hub interconnected between the communication module and the application processor of the electronic device operates with the low power. Upon receiving the wake-up signal from the communication module, the sensor hub can forward the received signal to the application processor to activate the application processor. Hence, the electronic device can perform the short-range communication with the input means using the BLE and thus reduce the battery power consumption. It is also possible to send a different type of packet other than the advertisement packet, or with different data altogether.

The electronic device can store the table which arranges data correlated to the distances to the input means based on the reception strength. In more detail, the electronic device can analyze the index region of the packet received from the input means, and then determine the distance to the input means by determining whether or not the packet is compromised. In other words, the electronic device can store in advance the table for extracting the distance to the input means based on the packet reception strength from the particular input means. Next, the electronic device can analyze the packet periodically received from the input means at the preset time intervals and thus extract the distance to the input means. In detail, the electronic device can analyze the reception strength of the packet from the input means and extracts the distance from the electronic device to the input means by fetching the table stored therein and comparing the analyzed signal reception strength with the values of the table.

When the extracted information from the table correlating the distance to the input means from the electronic device falls within a communication range 701, the electronic device can send the ACK signal corresponding to the advertisement packet received from the input means. Hence, upon receiving the ACK signal corresponding to the advertisement packet from the electronic device, the input means can confirm that the payment function is executable. More specifically, the input means can conduct the payment function only when receiving the ACK signal corresponding to the advertisement packet from the electronic device. However, when the input means is located inside the communication range 701 of the electronic device but the payment control mode is set to the first mode, the payment function of the input means can be controlled even within a preset distance 702 from the electronic device. In more detail, the distance 702 between the electronic device and the input means can be set within a communication range 701 between the electronic device and the input means. The distance between the electronic device and the input means is set in order to prepare for the short-distance loss of the input means. More specifically, although the distance of the input means from the electronic device falls within the communication range 701 of the electronic device, the user can prepare for the short-distance loss of the input means by setting the distance of the input means from the electronic device so that the payment function can be controlled in the short distance.

For example, with reference to FIG. 7 it is assumed that the communication range 701 of the electronic device and the input means is 50m, the distance set by the user is 20m (represented by 702), and the current payment control mode is the first mode. When the input means is placed within 20m away from the electronic device, the input means can conduct the payment function by sending and receiving necessary information for the payment to and from the payment reader. By contrast, when the input means is 45m away from the electronic device, the input means, even within the communication range 701 from the electronic device, cannot perform the payment function because it gets out of the preset distance 20m. More specifically, when the input means is located outside of the preset distance 20m from the electronic device, the electronic device can add the payment lock instruction to the ACK signal to send to the input means. In other words, the input means can receive the ACK signal including the payment lock instruction from the electronic device and lock the payment function.

When the distance of the input means from the electronic device exceeds the communication range 701, the input means can control the payment function. In detail, in the range 703, the input means can delete the stored payment information. The input means in the range 703 cannot receive (e.g. is too far away to receive the signal) from the ACK signal corresponding to the packet sent to the electronic device, from the electronic device. Next, when the input means does not receive an ACK signal from the electronic device within the preset time, the input means can determine the long-distance loss from the electronic device and delete the stored payment information. In conclusion, the input means is separated from the electronic device and lost easily. Hence, when the electronic device receives the preset distance and determines that the input means is located outside of the preset distance from the electronic device, the electronic device can send the payment lock instruction in order to disable the payment function of the input means. When the input does not receive the ACK signal from the electronic device within the preset time, the input means can determine the input means is a long-distance loss from the electronic device and deletes the stored payment information. The reason for deleting the stored payment information is to block an unauthorized third party who has obtained the input means from misusing the user's personal information for the payment or to make unauthorized payments.

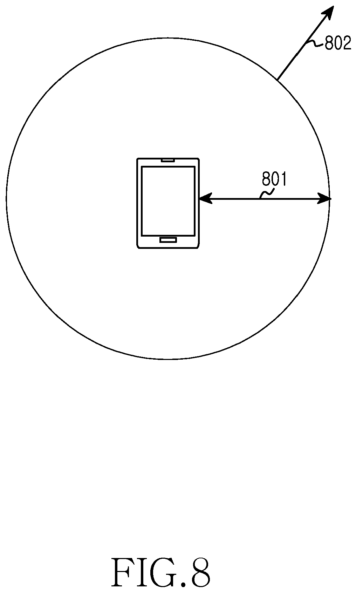

FIG. 8 depicts the payment function control in the second mode according to an exemplary embodiment of the present disclosure. The electronic device can periodically receive the advertisement packet from the input means at the preset time intervals and thus extract from values in storage the distance from the electronic device to the input means. More specifically, the electronic device stores the values in a table which arranges the distances to the input means based on the packet reception strength. Upon receiving the advertisement packet from the input means, the electronic device can analyze and compare the reception strength of the received packet with the table values, and then extract from the table the distance of the input means. When the extracted distance of the input means falls within a communication range 801, the electronic device can send the ACK signal corresponding to the advertisement packet to the input means. This sending of the ACK signifies that the electronic device and the input means are in the communication range. Likewise, the input means receives the ACK signal corresponding to the advertisement packet from the electronic device, which signifies that the electronic device does not interrupt the payment function at all. That is, the input means can conduct the payment by sending and receiving the payment information to and from the payment reader.

When the input means cannot receive the ACK signal from the electronic device in a range 802, the input means can check the preset payment control mode. In detail, when there is no ACK signal corresponding to the advertisement packet received from the electronic device, the input means can check the payment control mode which can be set to the first mode or the second mode. When the payment control mode is set to the second mode, the input means can count the time starting from non-receipt of the ACK signal and change control the payment function according to the value of counted time. More specifically, when the time counted by the input means of non-receipt of the ACK signal from the electronic device exceeds the first time (e.g. a first time threshold), the input means can conduct the payment lock function. When the time counted by the input means of non-receipt of the ACK signal from the electronic device exceeds the second time (e.g. a second time threshold), the input means can delete the stored payment information. More particularly, when the time counted by the input means of non-receipt of the ACK signal from the electronic device exceeds the first time, the input means can determine its status to be short-term missing and proceed to lock/disable the payment function. Likewise, when the time counted by the input means of non-receipt of the ACK signal from the electronic device exceeds the second time, the input means can determine its status to be long-term missing and delete the stored payment information.

Herein, the detailed execution of the payment lock function can be determined based on Equation 1.

$$T_1 \leq T < T_2 \qquad \ldots(1)$$

wherein $T_1$ denotes the first time, $T$ denotes the counted time, and $T_2$ denotes the second time.

For example, it is assumed that the first time is, for example, 20 minutes and the second time is, for example, 40 minutes. It is also assumed that the time count starts when the input means is away from the electronic device in the range 802 shown in FIG. 8. When the time counted by the input means exceeds 20 minutes, the input means can confirm the short-term loss and then lock its payment function.

Details of the payment information deletion can be determined based on Equation 2:

$$T_2 \leq T \qquad \qquad \ldots (2)$$

wherein $T_2$ denotes the second time and $T$ denotes the counted time.

When the time counted by the input means exceeds the first time of 20 minutes and the second time of 40 minutes, the input means can confirm the long-term loss and then delete the stored payment information. In other words, when the input means determines the short-term and long-term loss, the present disclosure locks the payment function and deletes the stored payment information so as to prevent the payment by the third party who obtains the input means.

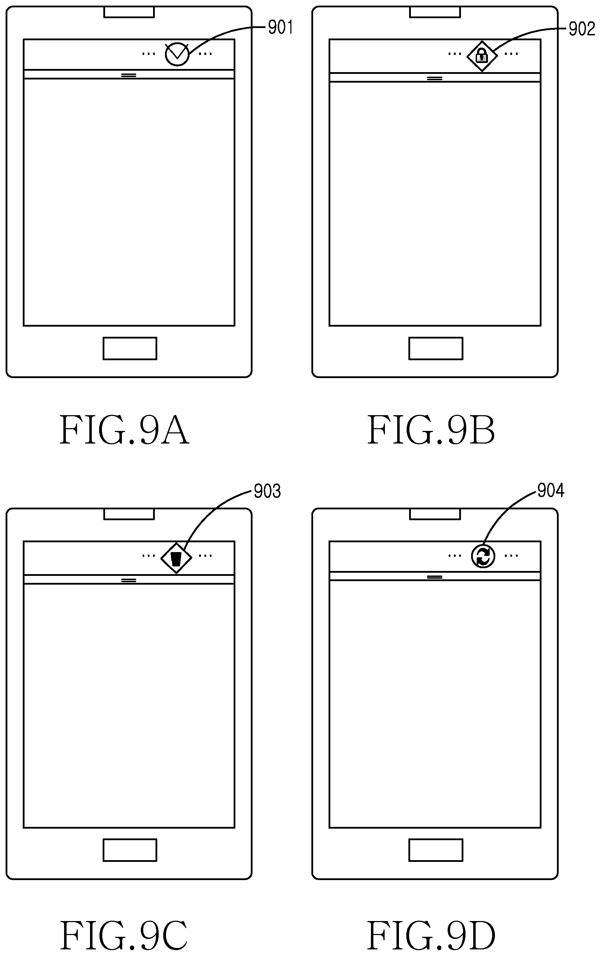

FIGs. 9A, 9B, 9C and 9D depict the payment function of the input means displayed as an icon 901, 902, 903, 904 in a particular region of the electronic device according to an exemplary embodiment of the present disclosure. As shown in FIGs. 9A, 9B, 9C and 9D, the electronic device can display the payment of the current input means as the icon 901, 902, 903, 904 in a particular region. In more detail, the input means stores the user's payment information and executes the payment function by sending and receiving the payment information to and from the payment reader. The electronic device can display the status of the payment function of the input means on the touch screen.

For example, with regard to FIG. 9A, the electronic device can display the payable status of the input means as an icon 901 on the touch screen as shown. More specifically, the electronic device can display the icon indicative of the payable input means in an indicator region and thus provide the convenience to the user. In other words, the user, who can easily see the icon corresponding to the payable input means displayed in the indicator region of the electronic device, can easily determine whether the input means is payable without a separate interaction.

As shown in FIG. 9B, the electronic device can display the payable status of the input means as another icon 902 on the touch screen as shown. More specifically, the electronic device can display the icon 902 indicative of the locked payment function of the input means in the indicator region. More particularly, the user can see the icon 902 displayed in the indicator region of the electronic device, and determine that the payment function of the input means is locked, and this information can motivate the user to look for the input means near the electronic device. For example, when the payment control mode of the input means is set to the first mode in the electronic device, the user can determine that the input means is placed in the communication range and out of the preset distance. When the payment control mode of the input means is set to the second mode in the electronic device, the user can determine that the input means is placed outside the communication range and check the time starting from the out-of-communication-range based on the first preset time.

As shown in FIG. 9C, the electronic device can display the payable status of the input means as yet another icon 903 on the touch screen as shown. More specifically, the electronic device can display the icon 903 indicative of the deleted payment information (which in this particular non-limiting example the icon 903 is a trash basket status of the input means in the indicator region. For example, the user can see the icon 903 displayed in the indicator region of the electronic device, and determine that the payment information stored in the input means has been deleted. For example, when the payment control mode of the input means is set to the first mode in the electronic device, the user can determine that the input means is placed out of the communication range. When the payment control mode of the input means is set to the second mode in the electronic device, the user can determine that the input means is placed outside the communication range and check the time starting from the out-of-communication-range based on the second preset time.

With regard to FIG. 9D, the electronic device can display the payable status of the input means as still another icon 904 on the touch screen as shown. More specifically, the electronic device can display the icon 904 indicating that the input means with the locked payment or the deleted payment information returns to the payment mode in the indicator region. That is, the user can see the icon displayed in the indicator region of the electronic device, and determine that the input means with the locked payment or the deleted payment information returns to the payment mode.

While the payable status of the input means is displayed as the icon shown in the indicator region of the electronic device in FIGs. 9A through 9D, an artisan should understand and appreciate that the icon may be displayed in any random region of the touch screen of the electronic device, instead of or in addition to the indicator region of the electronic device. The icon 901, 902, 903, 904 indicative of the payable status of the input means may be displayed in a screen of the input means as well as the electronic device.

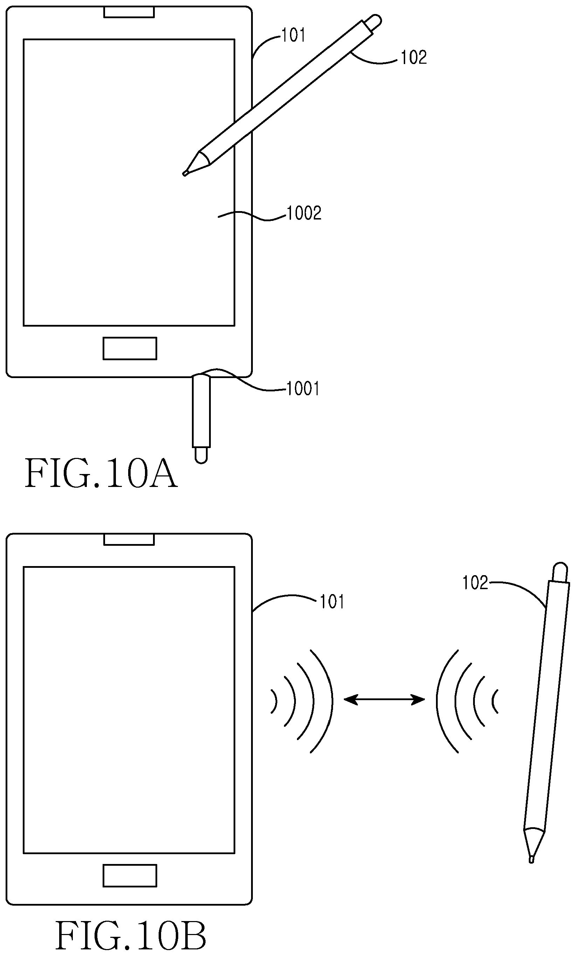

FIG. 10A depicts the input means returning to the payable mode according to an exemplary embodiment of the present disclosure. The electronic device 101 can control the payment function of the input means 102 and then detect that the input means 102 is mounted at a preset position 1001 or accessed in a preset region 1002 as shown in FIG. 10A. More specifically, after the input means 102 locks the payment function or deletes the stored payment information, the electronic device 101 can detect the presence of the input means 102 mounted at the preset position 1001 or accessing the preset region 1002. For example, after the input means 102 locks the payment function or deletes the stored payment information, the electronic device 101 can detect that the input means 102 touches a certain region of the touch screen and accesses a certain region of the electronic device 101.

With reference to FIG. 10B, for the short-range communication with the input means using the BLE, the electronic device accesses the input means which touches the certain region of the touch screen or accesses the certain region as shown. In further detail, the electronic device can receive the packet from the input means, analyze the ID information in the received packet, and confirm the match of the analyzed ID information and the preset ID information of the input means. In other words, when the analyzed ID information matches the preset ID information of the input means, the electronic device can confirm that the input means which touches the certain region of the touch screen or accesses the certain region is identical with the preset input means. When the input means touching the certain region of the touch screen or accessing the certain region is identical with the preset input means, the electronic device can re-access the input means by sending the ACK signal to the input means.

The electronic device 101 checks the payment control status of the input means 102 and then sends a signal to the input means according to the current payment control status of the input means 102 so that the input means 102 can conduct/restore/reactivate the payment function again. For example, when detecting the payment lock of the input means, the electronic device 101 can send the signal including the instruction to unlock the payment, to the input means 102. More specifically, when the input means 102 currently locks the payment, the electronic device 101 can send to the input means 102 the signal including the instruction to unlock the payment, together with the ACK signal. For example, when detecting the deleted payment information stored in the input means 102, the electronic device 101 receives the user's personal information. When the input user personal information matches the preset information, the electronic device 101 can send a signal including a transaction activation instruction, to the input means 102. For example, to restore the deleted payment information in the input means 102, the electronic device 101 can authenticate the user and then send the signal including the transaction activation instruction to the input means 102 when the user is authenticated.

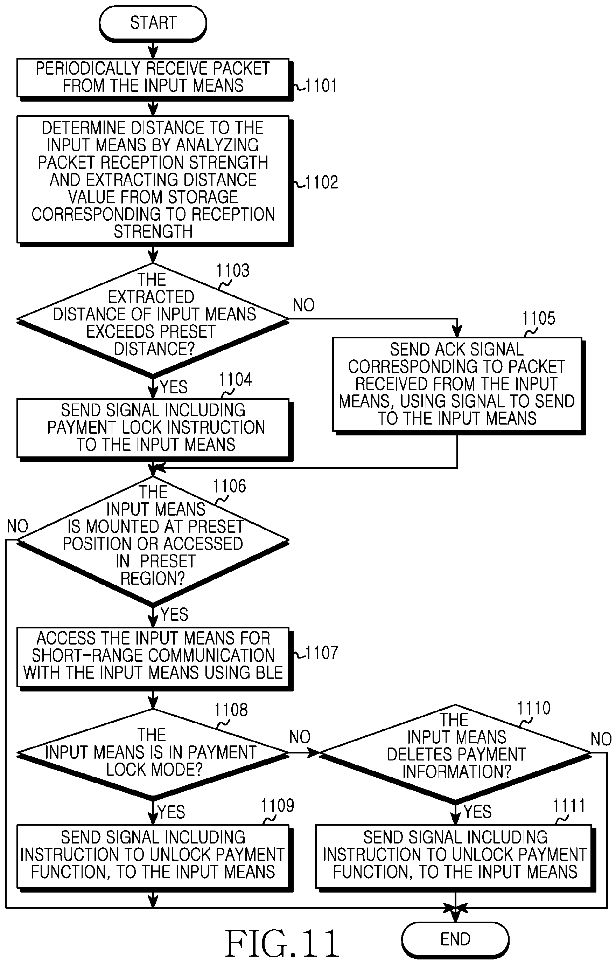

FIG. 11 is a flowchart showing exemplary operations of the electronic device according to an exemplary embodiment of the present disclosure.

As shown in FIG. 11, at (1101) the electronic device 101 can periodically receive a packet from the input means 102. In more detail, the electronic device 101 can send and receive the information to and from the input means 102 through the short-range communication, for example, by using the BLE. Herein, the short-range communication using the BLE allows the electronic device to communicate with the low power even in the deep-sleep mode. More specifically, even when the electronic device is in the deep-sleep mode, a sensor hub interconnected between the communication module and the application processor of the electronic device operates with low power. Upon receiving the wake-up signal from the communication module, the sensor hub can forward the received signal to the application processor to activate the application processor. Hence, the electronic device 101 can perform the short-range communication with the input means 102 using the BLE and thus reduce battery power consumption.

At 1102, the electronic device 101 periodically scans the packet received from the input means, can determine the distance from the electronic device 101 to the input means 102 by analyzing the packet reception strength and extracting a distance value from storage that corresponds to the packet reception strength. In more detail, the electronic device can store a table which arranges the distance values from the electronic device 101 to the input means 102 based on the packet reception strength. When receiving the advertisement packet from the input means 102, the electronic device can analyze and compare the packet reception strength with the stored table values, and thus extract from the storage table the distance from the electronic device 101 to the input means 102.

At 1103, the electronic device can determine whether the determined distance of the input means exceeds a preset distance. Herein, the distance between the electronic device 101 and the input means 102 can be preset within the communication range of the electronic device and the input means, in order to prevent the short-distance loss of the input means 102. More specifically, although the input means 102 is away from the electronic device 101 but still within the communication range of the electronic device 101, the user can set the distance value of the input means 102 from the electronic device 101 as criteria to prepare for the short-distance loss of the input means 102.

When at 1103 the distance to the input means extracted from the storage table by the electronic device 101 based on reception packet strength exceeds the preset distance, then at 1104 electronic device 101 can send the signal including the payment lock instruction to the input means 102. In more detail, when analyzing the advertisement packet signal received from the input means 102 and locating the input means inside the communication range but out of the preset distance, the electronic device 101 can send to the input means 102 the ACK signal including the payment lock instruction. Herein, the payment lock function can disable the payment function of the input means. More specifically, although the electronic device 101 and the input means 102 are within the communication range to allow the payment function of the input means, when the input means is outside the preset distance from the electronic device, the electronic device can 101 send the ACK signal including the payment lock instruction to the input means 102. For example, it is assumed that the distance between the electronic device 101 and the input means 102 is set to 10m and the communication range of the electronic device and the input means is set to 50m. When the distance to the input means 102 extracted from the storage table by the electronic device 101 is 25m, the electronic device 101 can determine the short-distance loss of the input means 102. Hence, the electronic device 101 can send the ACK signal including the payment lock instruction to the input means 102. Namely, the present disclosure addresses the misuse by a third party who obtains access to the input means 102 that is located outside the preset distance.

When at 1103 the distance from the electronic device 101 to the input means 102 extracted from the storage table by the electronic device does not exceed (i.e. falls within) the preset distance set by the electronic device, at 1105 the electronic device 101 can send the ACK signal corresponding to the packet received from the input means 102, using the signal to send to the input means 102. In other words, the electronic device 101 sends the ACK signal corresponding to the advertisement packet to the input means 102, and this transmission of the ACK signal signifies that the electronic device 101 and the input means 102 are within the communication range. Likewise, when the input means 102 receives the ACK signal from the electronic device 101 corresponding to the advertisement packet, which signifies that the electronic device does not interrupt the payment function at all.

For example, it is assumed, that the communication range of the electronic device 101 and the input means 102 is 50m, the distance set by the user is 20m, and the current payment control mode is the first mode. When the input means 102 is located within 20m away from the electronic device 101, the input means 102 can conduct the payment function by sending and receiving the necessary payment information to and from the payment reader.

At 1106, the electronic device can detect whether the input means 102 is mounted at the preset position (FIG. 10A 1001) or accessed in the preset region (also shown in FIG. 10A). More specifically with reference to FIG. 10A, after the input means 102 locks the payment function or deletes the stored payment information, the electronic device 101 can detect that the input means is mounted at the preset position 1001 or accessed in the preset region. For example, after the input means 102 locks the payment function or deletes the stored payment information, the electronic device 101 can detect that the input means touches a certain region of the touch screen and accesses a certain region of the electronic device.

Upon detecting at 1106 that the input means 102 is mounted at the preset position 1001 (FIG. 10A) or is accessing the preset region of the electronic device 101, then at 1107 the electronic device 101 can access the input means 102 for the sake of the short-range communication with the input means 102 using the BLE. More specifically, the electronic device 101 can receive the packet from the input means 102, analyze the ID information in the received packet, and confirm the match of the analyzed ID information and the preset ID information of the input means 102. In other words, when the analyzed ID information matches the preset ID information of the input means 102, the electronic device 101 can confirm that the input means 102 which touches the certain region of the touch screen or accesses the certain region is identical with the preset input means. When the identification of the input means touching the certain region or accessing the certain region of the touch screen is identical with an identification of the preset input means, the electronic device 101 can re-access the input means by sending the ACK signal to the input means 102.

At 1108, the electronic device can determine whether the input means is in the payment lock mode. In detail, the electronic device can determine whether the input means mounted at the preset position or accessed in the preset region is in the payment lock mode.

Upon detecting the payment lock mode of the input means at 1108, then at 1109 the electronic device can send the signal including the instruction to unlock the payment function to the input means. More specifically, when the input means is in the payment lock mode, the electronic device 101 can send the signal to the input means 102 including the instruction to unlock the payment, together with the ACK signal.

When at 1108 the input means is not detected as being payment lock mode, then at 1110 the electronic device 101 can determine whether the input means 102 deletes the payment information. In more detail, the electronic device can determine whether the input means 102 mounted at the preset position or accessed in the preset region, deletes the stored payment information.

When at 1110 the input means 102 deletes the payment information and the input user personal information matches the preset information, then at 1111 the electronic device can send the signal including the transaction activation instruction to the input means. More specifically, when detecting the deleted payment information stored in the input means 102, the electronic device 101 receives the user's personal information. When the input user personal information matches the preset information, the electronic device 101 can send to the input means 102 the ACK signal including the transaction activation instruction. For example, to restore the deleted payment information in the input means 102, the electronic device 101 can authenticate the user and then send to the input means 120 the ACK signal including the transaction activation instruction when the user is authenticated.

When the input means is not mounted at the preset position or accessed in the preset region in step 1106, the electronic device finishes this process.

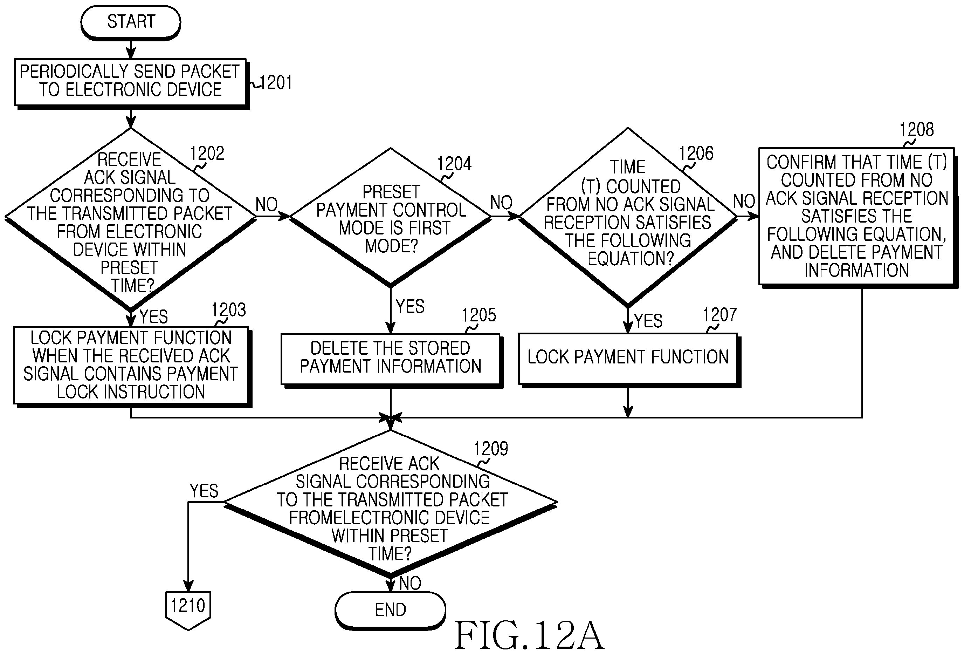

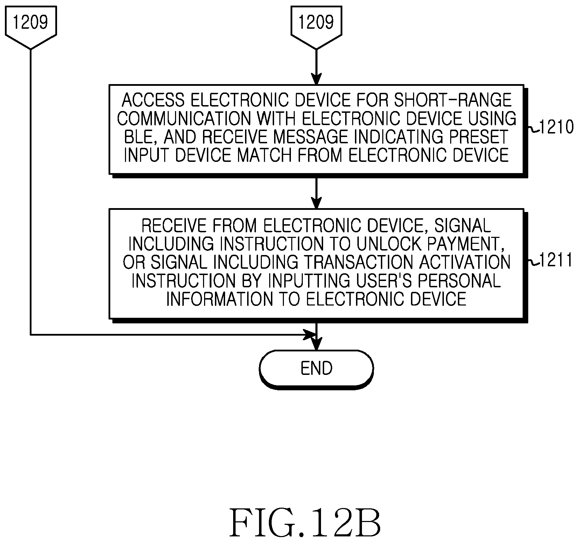

FIG. 12 is a flowchart of exemplary operations of the input means according to an exemplary embodiment of the present disclosure.

As shown in FIG. 12A, at 1201 the input means 102 can periodically send the packet to the electronic device 101. Herein, the packet periodically transmitted by the input means 102 to the electronic device 101 at the preset time intervals can be the advertisement packet using the BLE. In further detail, since the input means 102 periodically sends the advertisement packet using the BLE at the preset time intervals, the input means 102 consumes relatively little power to send the advertisement packet to the electronic device 101 and thus reduces power consumption.

At 1202, the input means 120 can determine whether the ACK signal corresponding to the transmitted packet has been received from the electronic device 101 within the preset time. More specifically, the input means 102 can determine whether the ACK signal corresponding to the transmitted advertisement packet is received from the electronic device 101 within the preset time.

Upon receiving the ACK signal at 1202 corresponding to the transmitted advertisement packet from the electronic device within the preset time and the received ACK signal contains the payment lock instruction, at 1203 the input means can lock the payment function. In detail, the input means 102 can control the payment function according to the ACK signal reception from the electronic device 101 in response to the advertisement packet. When receiving the ACK signal from the electronic device 101, the input means 102 can analyze the ACK signal received from the electronic device. Next, the input means can execute the payment lock function when the analyzed ACK signal includes the payment lock instruction. Hence, the input means cannot perform the payment function by sending and receiving the payment information to and from the payment reader.

When at 1202 the ACK signal corresponding to the transmitted packet from the electronic device is not received within the preset time, then at 1204 the input means can determine whether the preset payment control mode is the first mode. Herein, the first mode can control the payment function based on the distance between the electronic device and the input means. More specifically, when the input means is out of the communication range from the electronic device, the input means cannot receive the ACK signal corresponding to the advertisement packet, which is sent to the electronic device, from the electronic device.

When at 1204 the preset payment control mode is the first mode, then at 1205 the input means 102 can delete the stored payment information. That is, when the input means 102 is outside of the communication range of the electronic device 101, the input means 102 can autonomously determine self-status, such that the input means is missing at a relatively long distance from the electronic device 101 because the input means 102 is out of communicative range of the electronic device 101. Hence, the input means 102 can autonomously delete its stored payment information. When the input means 102 continues the payment function without deleting the stored payment information, an unauthorized third party who obtained possession of the input means can make unauthorized payments and access personal information. To prevent such illegal payment, the input means 102 can delete the payment information upon determining the long distance status from the electronic device 101. In addition, while many examples herein are in the context of the input means 120 is located distance away from the electronic device 101, it is also possible and likely that the electronic device 101 is located a distance away from the input means, in other words the electronic device changes positions rather than the input means.

Referring back to FIG. 12A, when at 1204 the preset payment control mode is not the first mode, then at 1206 the input means 102 can determine whether the time counted from non-reception of the ACK signal satisfies the following equation. Specifically, upon confirming the preset payment control mode is in the second mode, the input means 102 can determine whether the time counted from the out-of-communication-range exceeds the first preset time.

When at 1206 the time counted from the out-of-communication-range of the electronic device exceeds the first preset time, at 1207 the input means 102 can lock the payment function. For example, it is assumed that the first time is 20 minutes and the second time is 40 minutes. It is also assumed that the time count starts when the input means exits the communication range from the electronic device 101. In this case, when the time counted by the input means exceeds 20 minutes, the input means 102 can confirm the short-term loss and then lock its payment function.

However, when at 1206 the time counted from the out-of-communication-range of the electronic device exceeds the first preset time, and the time counted from non-reception of the ACK signal reception exceeds the second time, then at 1208 the input means 102 can delete the stored payment information. When the counted time exceeds the first time being 20 minutes and the second time being 40 minutes, the input means can determine the long-term loss and then delete the stored payment information. In addition, when the input means 120 determines the short-term and long-term missing, the present disclosure locks the payment function and deletes the stored payment information so as to prevent an unauthorized third party from using the input means 102 from making the payment.

In step 1209, the input means 120 can determine whether it (the input means) is mounted at the preset position of the electronic device or accesses the preset region of the electronic device. In detail, after the input means locks the payment function or deletes the stored payment information, and the electronic device can detect whether the input means is mounted at the preset position or accesses the preset region in the electronic device. For example, even after the input means 102 locks the payment function or deletes the stored payment information, the input means 102 can detect the touch on a certain region of the touch screen and the access to the certain region of the electronic device.

When the input means 102 is mounted at the preset position of the electronic device 101 or accesses the preset region of the electronic device 101, then at 1210 the input means 102 can access the electronic device 101 for the short-range communication with the electronic device 101 using the BLE, and receive the message indicating the same input device from the electronic device. More specifically, the input means can send the packet including its ID information to the electronic device, and then receive the ACK signal from the electronic device. In other words, when the electronic device 101 analyzes the packet received from the input means and confirms the match with the preset ID information of the input means 102, the input means can receive the message indicating the same input means from the electronic device.

At 1211 (FIG. 12B), the input means 102 can receive from the electronic device the signal including the instruction to unlock the payment, or the signal including the transaction activation instruction by inputting the user's personal information to the electronic device. More specifically, the input means can input the user's personal information to the electronic device and then receive the signal including the transaction activation instruction from the electronic device so as to recover the deleted payment information.

When at 1209 the input means is not mounted at the preset position of the electronic device or does not access the preset region of the electronic device, the input means 102 finishes this process.

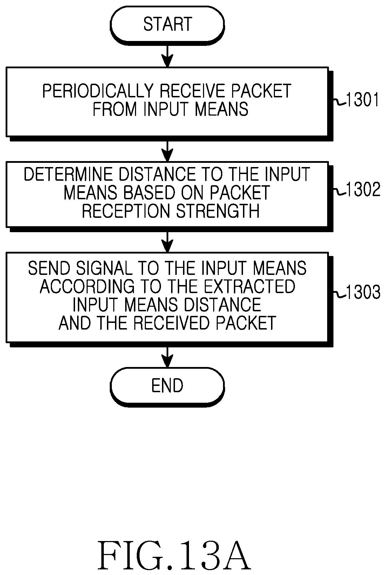

FIG. 13A is a flowchart showing exemplary operations of the electronic device according to an exemplary embodiment of the present disclosure. As shown in FIG. 13A, at 1301 the electronic device can periodically receive the packet from the input means. In more detail, the electronic device 101 can send and receive the information to and from the input means 102 through the short-range communication using the BLE. Herein, the short-range communication using the BLE allows the electronic device to communicate with the low power even in the deep-sleep mode. More specifically, even when the electronic device is in the deep-sleep mode, the sensor hub interconnected between the communication module and the application processor of the electronic device operates with relatively low power that is far lower than for example, than to activate the application processor. Upon receiving the wake-up signal from the communication module, the sensor hub can forward the received signal to the application processor to activate the application processor. Hence, the electronic device can perform the short-range communication with the input means using the BLE and thus reduce battery power consumption.

At 1302, the electronic device 101 periodically receives the packet from the input means 102 can determine the distance from the electronic device 101 to the input means 102 based on extracting a distance value from storage corresponding to the received packet reception strength. In detail, the electronic device can store the table which arranges the distances to the input means based on the packet reception strength. When receiving the advertisement packet from the input means, the electronic device can analyze and compare the packet reception strength with the stored table values, and thus extract the distance of the input means from storage or a storage table.

At 1303, the electronic device 101 can send the signal to the input means 102 according to the extracted distance of the electronic device from the input means and the received packet. When the payment control mode of the input means is set to the first mode, the electronic device can check the input preset distance and send the signal corresponding to the received packet to the input means. For example, it is assumed that the distance between the electronic device and the input means is set to 10m and the communication range of the electronic device and the input means is set to 50m. When the distance to the input means is determined by the electronic device is 25m, the electronic device 101 can determine a short-distance loss of the input means 102. Hence, the electronic device can send the ACK signal including the payment lock instruction to the input means. When the distance to the input device determined by the electronic device falls within the preset distance, the electronic device can send the ACK signal corresponding to the packet received from the input means, using the signal to send to the input means. In other words, the electronic device sends the ACK signal corresponding to the advertisement packet to the input means, which signifies that the electronic device and the input means are in the communication range. Likewise, the input means receives the ACK signal corresponding to the advertisement packet from the electronic device, which signifies that the electronic device does not interrupt the payment function at all. For example, it is assumed that the communication range of the electronic device and the input means is 50m, the distance set by the user is 20m, and the current payment control mode is the first mode. When the input means 102 is placed within 20m away from the electronic device, the input means can conduct the payment function by sending and receiving the necessary payment information to and from the payment reader.

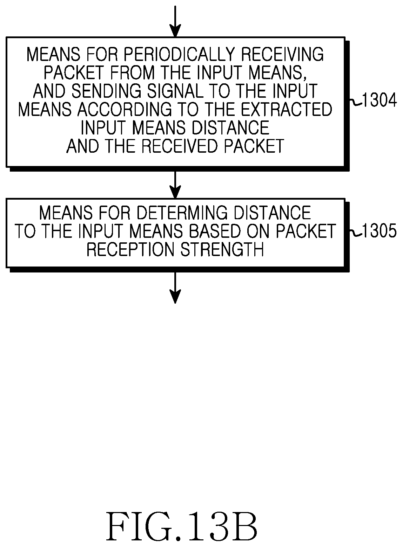

FIG. 13B depicts the electronic device according to an exemplary embodiment of the present disclosure. As shown in FIG. 13B, a communication module 1304 comprising hardware such as a transceiver of the electronic device can periodically receive the packet from the input means, and the communication module 1304 transmits the signal to the input means according to the extracted distance from a storage table in storage of the electronic device and the received packet. In more detail, the communication module 1304 of the electronic device can scan the advertisement packet periodically received from the input means, and send the signal corresponding to the packet received from the input means, according to the distance of the input means from the electronic device, the distance being extracted from a table in the electronic device by a processor unit 1305.

The processor unit 1305 of the electronic device, which comprises circuitry that may be integrated, can extract from the storage table the distance to the input means based on the packet reception strength. In detail, the processor unit 1305 of the electronic device can analyze the reception strength of the packet, fetch the table which arranges the distances to the input means based on the signal reception strength, compare the analyzed signal reception strength with the values of the table, and thus extract from the fetched table the distance from electronic device 101 to the input means 102.

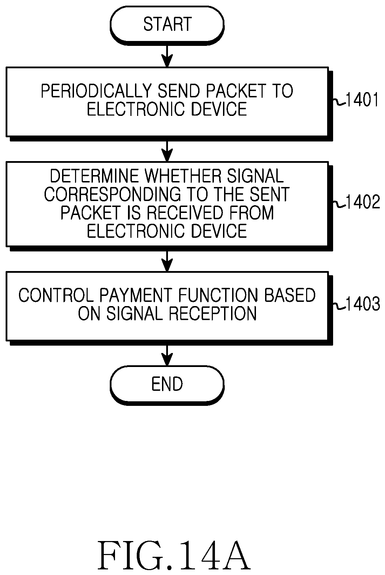

FIG. 14A is a flowchart illustrating exemplary operations of the input means according to an exemplary embodiment of the present disclosure. As shown in FIG. 14A, at 1401, the input means can periodically transmit the packet to the electronic device. Herein, the packet periodically transmitted by the input means to the electronic device at the preset time intervals can be the advertisement packet using the BLE. In further detail, since the input means periodically sends the advertisement packet using the BLE at the preset time intervals, the input means consumes the low power to send the advertisement packet and thus reduces the power consumption.

At 1402, the input means can determine whether the signal corresponding to the sent packet is received from the electronic device. More specifically, the input means can determine whether the ACK signal corresponding to the sent advertisement packet is received from the electronic device within the preset time. When the input means is arranged away from the electronic device but still within the communication range, the input means can receive from the electronic device the ACK signal corresponding to the sent packet. When the input means is located a distance away from the electronic device that is outside the communication range, the input means cannot receive the signal corresponding to the sent packet, from the electronic device.

At 1403, the input means can control the payment function according to the signal reception. Specifically, the input means can control the payment function according to the ACK signal reception from the electronic device in response to the advertisement packet. Upon receiving the ACK signal from the electronic device, the input means can analyze the ACK signal received from the electronic device. Next, the input means can lock the payment function when the analyzed ACK signal contains the payment lock instruction. Hence, the input means cannot perform the payment function by sending and receiving the payment information to and from the payment reader. In other words, although the input means is placed inside the communication range of the electronic device, the user of the electronic device can determine the short-distance loss of the input means.

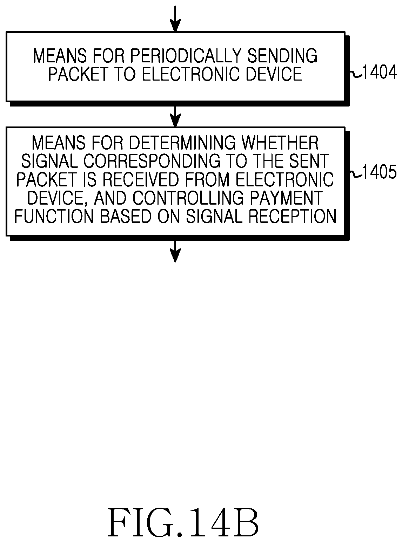

FIG. 14B depicts the input means according to an exemplary embodiment of the present disclosure. As shown in FIG. 14B, a communication module 1404 of the input means comprising hardware including a transceiver so as to periodically send the packet to the electronic device. Herein, the packet periodically transmitted by the communication module 1404 of the input means to the electronic device at the preset time intervals can be the advertisement packet using the BLE. In further detail, since the communication module 1404 of the input means periodically sends the advertisement packet using the BLE at the preset time intervals, the input means consumes the low power to send the advertisement packet and thus reduces the power consumption.

A controller 1405 of the input means can determine whether the signal corresponding to the sent packet is received from the electronic device, and control the payment function according to the signal reception. Specifically, the controller of the input means can control the payment function according to the ACK signal reception from the electronic device in response to the advertisement packet. When the communication module of the input means receives the ACK signal from the electronic device, the controller of the input means can analyze the ACK signal received from the electronic device. Next, the controller of the input means can lock the payment function when the analyzed ACK signal contains the payment lock instruction. Hence, the input means cannot perform the payment function by sending and receiving the payment information to and from the payment reader. In other words, although the input means is placed inside the communication range of the electronic device, the user of the electronic device can determine the short-distance loss of the input means.

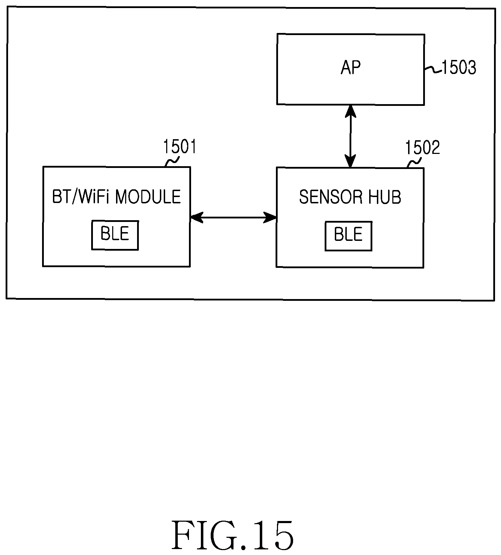

FIG. 15 is a simplified diagram of the electronic device according to an exemplary embodiment of the present disclosure. As shown in FIG. 15, the electronic device can include a BT/WiFi module 1501, a sensor hub 1502, and an AP 1503. The BT/WiFi module 1501 comprises hardware and can send and receive the information to and from the input means through Bluetooth short-range communication using the BLE. Herein, the short-range communication using the BLE allows the electronic device to communicate with the low power even in the deep-sleep mode. That is, the BT/WiFi module 1501 can perform the short-range communication with the input means with the low power even when the electronic device is in the deep-sleep mode. When receiving the packet from the input means, the BT/WiFi module 1501 can send the wake-up signal to the sensor sub 1502. In other words, the BT/WiFi module 1501, upon receiving the packet from the input means, can send the wake-up signal to the sensor sub 1502 so as to activate the AP 1503.

The sensor hub 1502 is interconnected between the BT/WiFi module 1501 and the AP 1503, and receives the wake-up signal from the BT/WiFi module 1501 to activate the AP 1503 in the deep-sleep mode. More specifically, the sensor hub 1502 operates with the low power even when the electronic device is in the deep-sleep mode. Upon receiving the wake-up signal from the BT/WiFi module 1501, the sensor hub 1502 can activate the AP 1503.

The AP 1503, receiving the wake-up signal from the sensor hub 1502, can wake up from the deep sleep and perform a necessary operation. Hence, the electronic device can reduce the battery consumption through the short-range communication with the input means using the BLE.

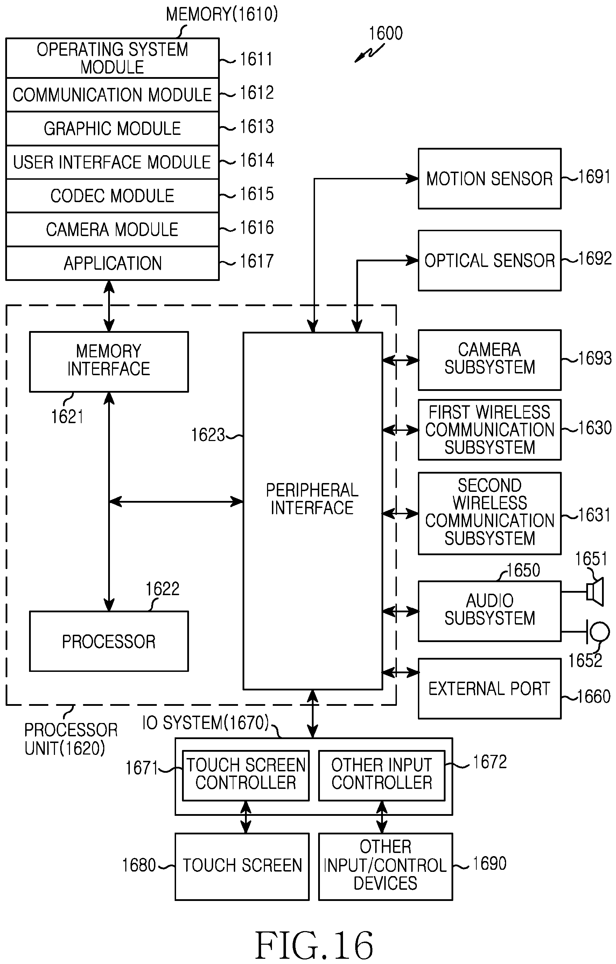

FIG. 16 is a block diagram of the electronic device according to an exemplary embodiment of the present disclosure. The electronic device 1600, in a non-limiting example can be a portable electronic device, and may further being a handheld portable device such as portable terminal, mobile phone, mobile pad, media player, tablet computer, phablet, handheld computer, or Personal Digital Assistant (PDA), just to name some non-limiting examples. The electronic device 1600 may be a portable electronic device combining two or more functions of those devices.

The electronic device 1600 in this example includes a non-transitory memory 1610, a processor unit 1620, a first wireless communication subsystem 1630, a second wireless communication subsystem 1631, an external port 1660, an audio subsystem 1650, a speaker 1651, a microphone 1652, an Input Output (IO) system 1670, a touch screen 1680, and other input or control devices 1690. A plurality of memories 1610 and a plurality of external ports 1660 can be used.

The processor unit 1620 includes circuitry that can include a memory interface 1621, one or more processors 1622, and a peripheral interface 1623. In some cases, the processor unit 1620 may be referred to as the processor. The processor unit 1620 can determine the distance to the input means by analyzing the signal reception strength of the packet, receive the packet from the input means, analyze the ID information in the received packet, and confirm that the analyzed ID information matches the ID information of the input means. The processor unit 1620 can analyze the signal reception strength of the packet, fetch the table storing the distances of the input means based on the signal reception strength, and extract from the table the distance from the electronic device to the input means by comparing the analyzed signal reception strength with the values of the table. The processor unit 1620 can check the preset distance to the input means, determine whether the extracted input means distance falls within the preset distance, and detect that the input means is mounted at the preset position or accessed in the preset region. The processor unit 1620 can receive the packet from the input means, analyze the ID information in the received packet, confirm that the analyzed ID information matches the ID information of the input means, and thus confirm that the input means is the same as the preset input means. The processor unit 1620 can detect that the input means locks the payment function and deletes the payment information.

The processor 1622 performs various functions for the electronic device 1600 by running various operations by executing machine executable code, and processes and controls voice communication and data communication. The processor 1622 carries out methods according to exemplary embodiments of the present disclosure in association with being configured with machine executable code stored in the memory 1610.

The structure of the processor 1622 can include one or more data processors, an image processor, or a CODEC. The data processor, the image processor, or the CODEC may also be separately provided. Alternatively, the processor 1622 may include a plurality of processors for performing different functions. The peripheral interface 1623 connects the IO subsystem 1670 and various peripherals of the electronic device 1600 with the processor 1622 and the memory 1610 (through the memory interface 1621).

The various components of the electronic device 1600 can be coupled using one or more communication buses or one or more stream lines.

The external port 1660 is used to connect the portable electronic device to other electronic device directly or indirectly via a network (e.g., Internet, intranet, and wireless LAN). The external port 1660 can be, for example, but not limited to, a Universal Serial Bus (USB) port or a FIREWIRE port.

A motion sensor 1691 and an optical sensor 1692 are coupled to the peripheral interface 1623 to allow various functions. For example, the motion sensor 1691 and the optical sensor 1692 are coupled to the peripheral interface 1623 to detect a motion of the electronic device, an amount of charge transfer, and the light from the outside. Besides these, a positioning system and other sensors such as temperature sensor or bionic sensor can be coupled to the peripheral interface 1623 to perform their functions.

A camera subsystem 1693 can perform camera functions such as photo and video clip recording.

The optical sensor 1692 can employ a Charged Coupled Device (CCD) or a Complementary Metal-Oxide Semiconductor (CMOS) device.

The communication function is conducted by the one or more wireless communication subsystems 1630 and 1631. The wireless communication subsystems 1630 and 1631 can include radio frequency receiver and transmitter and/or optical (e.g., infrared light) receiver and transmitter. The first wireless communication subsystem 1630 and the second wireless communication subsystem 1631 can be distinguished based on a communication network of the electronic device 1600. For example, the communication network can include a communication subsystem designed to operate over, but not limited to, a Global System for Mobile communication (GSM) network, an Enhanced Data GSM Environment (EDGE) network, a Code Division Multiple Access (CDMA) network, a W-CDMA network, a Long Term Evolution (LTE) network, an Orthogonal Frequency Division Multiple Access (OFDMA) network, a Wireless Fidelity (Wi-Fi) network, a WiMax network and/or a Bluetooth network, just to name a few non-limiting examples. The first wireless communication subsystem 1630 and the second wireless communication subsystem 1631 may be integrated into a single wireless communication subsystem.

The audio subsystem 1650 can be coupled to the speaker 1651 and the microphone 1652 to process audio stream input and output such as voice recognition, voice reproduction, digital recording, and telephone function. That is, the audio subsystem 1650 communicates with the user through the speaker 1651 and the microphone 1652. The audio subsystem 1650 receives a data signal through the peripheral interface 1623 of the processor unit 1620 and converts the received data signal to an electric signal. The converted electric signal is fed to the speaker 1651. The speaker 1651 converts the electric signal to a sound wave audible by the user and outputs the sound wave. The microphone 1652 converts a sound wave from the user or other sound sources to an electric signal. The audio subsystem 1650 receives the converted electric signal from the microphone 1652. The audio subsystem 1650 converts the received electric signal to the audio data signal and sends the converted audio data signal to the peripheral interface 1623. The audio subsystem 1650 can include an attachable and detachable ear phone, head phone, or head set.

The IO subsystem 1670 can include a touch screen controller 1671 and/or another input controller 1672. The touch screen controller 1671 includes a processor or microprocessor, and can be coupled to the touch screen 1680. The touch screen 1680 and the touch screen controller 1671 can detect the contact and the motion or their abortion using, but not limited to, capacitive, resistive, infrared and surface sound wave techniques for determining one or more contact points with the touch screen 1680 and a multi-touch detection technique including various proximity sensor arrays or other elements. The other input controller 1672 can be coupled to the other input/control devices 1690. The other input/control devices 1690 can employ one or buttons, a rocker switch, a thumb wheel, a dial, a stick, and/or a pointer such as stylus.

The touch screen 1680 provides an I/O interface between the electronic device 1600 and the user. That is, the touch screen 1680 forwards the user's touch input to the electronic device 1600. The touch screen 1680 also functions as a medium for displaying the output of the electronic device 1600 to the user. In other words, the touch screen 1680 displays a visual output to the user. Such a visual output can be represented as text, graphic, video, and their combination.

The touch screen 1680 can employ various displays, examples of which include, but are not limited in any way to, Liquid Crystal Display (LCD), Light Emitting Diode (LED), Light emitting Polymer Display (LPD), Organic LED (OLED), Active Matrix OLED (AMOLED) or Flexible LED (FLED).

The memory 1610 can be coupled to the memory interface 1621. The memory 1610 can include fast random access memory (RAM) such as one or more magnetic disc storage devices and/or non-volatile memory, one or more optical storage devices, and/or a flash memory (e.g., NAND and NOR).

The memory 1610 stores machine executable code include an operating system module 1611, a communication module 1612, a graphic module 1613, a user interface module 1614, a MPEG module 1615, a camera module 1616, and one or more application modules 1617.

The communication module 1612 comprises hardware such as a transceiver and antenna and allows for communication with other electronic devices such as computer, server, and/or portable terminal, through the wireless communication subsystems 1630 and 1631 or the external port 1660. The communication module 1612 can scan the packet periodically received from the input means, and send the signal corresponding to the packet received from the input means, according to the extracted input means distance. The communication module 1612 can access the input means for the short-range communication with the input means using the BLE, and send the ACK signal to the input means. When the distance value extracted from storage to the input means exceeds the preset distance, the communication module 1612 can send the signal including the payment lock instruction to the input means. When the distance value extracted from storage to the input means falls within the preset distance, the communication module 1612 can send the ACK signal corresponding to the packet received from the input means, using the signal to send to the input means. The communication module 1612 can access the input means for the short-range communication with the input means using the BLE, send the ACK signal to the input means, and send the signal including the payment unlock instruction to the input means. When the input user personal information matches the preset information, the communication module 1612 can send the signal including the transaction activation instruction to the input means.

The graphic module 1613 includes machine readable instructions that can be executed by a processor or microprocessor for providing and displaying graphics on the touch screen 1680. The term 'graphics' encompasses text, web page, icon, digital image, video, and animation. The touch screen 1680 can receive the user's personal information so as to restore the payment information deleted in the input means.

The user interface module 1614 includes various software components relating to a user interface. The user interface module 1614 is involved in the status change of the user interface and the condition of the user interface status change.

The CODEC module 1615 can include software components relating to video file encoding and decoding. The CODEC module 1615 can include a video stream module such as MPEG module and/or H204 module. The CODEC module 1615 can include various audio file CODEC modules for AAA, AMR, and WMA. The CODEC module 1615 includes instruction sets corresponding to the methods of the present disclosure as described herein.

The camera module 1616 includes camera related software components allowing camera related processes and functions.

The application module 1617 includes a browser, an e-mail, an instant message, a word processing, keyboard emulation, an address book, a touch list, a widget, Digital Right Management (DRM), voice recognition, voice reproduction, a position determining function, and a location based service.

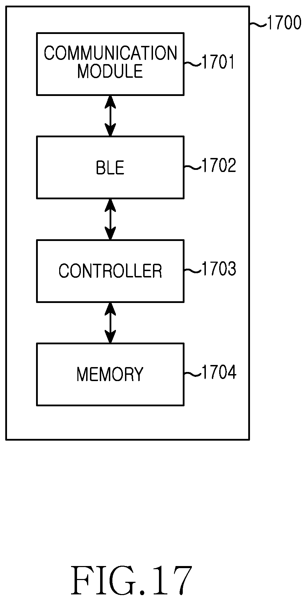

FIG. 17 is a block diagram of the input means (1700) according to an exemplary embodiment of the present disclosure. As shown in FIG. 17, the input means can include a communication module 1701, a BLE 1702, a controller 1703, and a memory 1704. The communication module 1701 processes the signals transmitted and received over an antenna for voice and data communication. For example, the communication module 1701 can access the electronic device for the short-range communication with the electronic device using the BLE, send the packet including the preset ID information to the electronic device, and receive the ACK signal from the electronic device. The communication module 1701 can access the electronic device for the short-range communication with the electronic device using the BLE, receive the message indicating the match with the preset input means from the electronic device, send the packet including the ID information to the electronic device, and receive the ACK signal from the electronic device. The communication module 1701 can receive the signal including the payment unlock instruction from the electronic device, and receive the signal including the transaction activation instruction from the electronic device.

The BLE 1702 shares the connection to measure the distance between the electronic device and the input means.

The controller 1703 can determine whether the signal corresponding to the transmitted packet is received from the electronic device, control the payment function according to the signal reception, determine whether the ACK signal corresponding to the transmitted packet is received from the electronic device with the preset time, analyze the received ACK signal when the ACK signal is received from the electronic device, and lock the payment function when the analyzed ACK signal includes the payment lock instruction. The controller 1703 can check the preset payment control mode when no ACK signal is received from the electronic device, and delete the stored payment information when the preset payment control mode is the first mode. The controller 1703 can check the preset payment control mode when no ACK signal is received from the electronic device, count the time from no ACK signal reception when the preset payment control mode is the second mode, and control the payment function according to the counted time. The controller 1703 can detect the mount at the preset position of the electronic device or the access to the preset region of the electronic device.

The memory 1704 can include a program storage for storing machine executable code that is loaded in the controller 1703 for execution to control the operations of the input means 102, and a non-transitory data storage for storing data generating in the program execution.

As constructed above, the controller 1703 can process the functions of the input means 102. The components are separately provided here to distinguish their functions. Accordingly, in the actual product, the controller 1703 can process all or part of the functions of the input means 102.

The apparatuses and methods of the disclosure can be implemented in hardware, and in part as firmware or as software or computer code that is stored on a non-transitory machine readable medium such as a CD ROM, a RAM, a floppy disk, a hard disk, or a magneto-optical disk or computer code downloaded over a network originally stored on a remote recording medium or a non-transitory machine readable medium and stored on a local non-transitory recording medium, so that the methods described herein are loaded into hardware such as a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that a "processor" or "microprocessor" constitute hardware in the claimed disclosure. Under the broadest reasonable interpretation, the appended claims constitute statutory subject matter in compliance with 35 U.S.C. §101.

The definition of the terms "unit" or "module" as referred to herein is to be understood as constituting hardware circuitry such as a processor or microprocessor configured for a certain desired functionality, or a communication module containing hardware such as transmitter, receiver or transceiver, or a non-transitory medium comprising machine executable code that is loaded into and executed by hardware for operation, in accordance with statutory subject matter under 35 U.S.C. §101 and do not constitute software per se.

While the disclosure has been shown and described with reference to certain exemplary embodiments thereof, it will be understood by those skilled in the art that various changes in form and details may be made therein without departing from the scope of the disclosure as defined by the appended claims and their equivalents.

**Claims**

**1.** An operating method of an electronic device (101), comprising:

receiving by the electronic device (101) a packet periodically transmitted from an input means (102) for inputting information to the electronic device, wherein the input means comprises a payment function;

determining a distance from the electronic device (101) to the input means (102) based on comparing a value of signal reception strength of the received packet with values of signal reception strength in storage and extracting from storage a distance value that corresponds to a matching signal strength;

sending an acknowledgement (ACK) signal by the electronic device (101) to the input means (102) when the distance value between the input means (102) and the electronic device (101) is within a predetermined range of distances extracted from storage, wherein the ACK signal sent by the electronic device (101) comprises a payment lock instruction when the distance value extracted from storage is within the predetermined range of distances from the electronic device (101) to the input means (102);

detecting that the input means (102) is mounted at a preset position of the electronic device (101) or accessed in a preset region of the electronic device (101);

accessing by the electronic device (101) the input means (102) via short-range communication;

detecting by the electronic device (101) that the input means (102) locked a payment function; and

sending to the input means (102) a signal comprising an instruction to unlock the payment, wherein the accessing of the input means (102) by the electronic device (101) via short-range communication includes receiving by the electronic device (101) the packet from the input means (102), analyzing ID information in the received packet, and confirming by the electronic device (101) that the analyzed ID information matches ID information of the input means (102), and that the input means (102) matches a preset input means.

2. The operating method of claim 1, further comprising:

autonomously deleting payment information by the input means (102) if it is determined by the input means (102) that the distance value between the electronic device (101) and input means (102) exceeds a communication range therebetween.

3. The operating method of claim 1, wherein the determining of the distance from the electronic device (101) to the input means (102) based on the signal reception strength of the packet comprises:

analyzing by the electronic device (101) the signal reception strength of the packet;

fetching by the electronic device (101) a table from storage which arranges respective distances to the input means (102) based on an associated signal reception strength; and

extracting from the table the distance value comprising a distance from the electronic device (101) to the input means (102) based on a comparison of the analyzed signal reception strength with distance values of the table.

4. The operating method of claim 1, wherein sending the ACK signal by the electronic device (101) to the input means (102) according to the distance value extracted from storage between the input means and the electronic device comprises:

checking the distance from the electronic device (101) to the input means (102);

determining whether the distance value extracted from storage between the electronic device (101) and the input means (102) falls within the checked distance value from the electronic device (101) to the input means (102); and

when the distance value extracted from storage between the electronic device (101) and the input means (102) exceeds the checked distance value from the electronic device (101) to the input means (102), sending the ACK signal to the input means (102) with the payment lock instruction.

5. The operating method of claim 4, further comprising:

when the distance value extracted from storage between the electronic device (101) and the input means (102) falls within the checked distance value, sending an acknowledgement (ACK) signal to the input means (102) corresponding to the packet received from the input means (102), by using the ACK signal.

6. The operating method of claim 1, further comprising:

detecting by the electronic device (101) that the input means (102) deleted payment information;

receiving by the electronic device (101) user personal information to restore the payment information deleted by the input means (102); and

when the received user personal information matches preset information, sending by the electronic device (101) to the input means (102) a signal comprising a transaction activation instruction.

7. An electronic device (1600) comprising:

a communication module (1612) including a transceiver configured to receive a packet transmitted from an input means (1700) and transmit to the input means (1700) an acknowledgement (ACK) signal according to a determined distance of the electronic device (1600) from the input means (1700) and
a processor unit (1620) configured to extract from storage the distance value of the electronic device (1600) to the input means (1700) based on a signal strength of the received packet, detect that the input means (102) is mounted at a preset position of the electronic device (101) or accessed in a preset region of the electronic device (101), access the input means (102) via short-range communication, detect that the input means (102) locked a payment function, and send to the input means (102) a signal comprising an instruction to unlock the payment;
wherein the access of the input means (102) via short-range communication includes receiving by the electronic device (101) the packet from the input means (102), analyzing ID information in the received packet, and confirming that the analyzed ID information matches ID information of the input means (102), and that the input means (102) matches a preset input means, and
wherein the acknowledgement (ACK) signal transmitted by the communication module (1612) comprises a payment lock instruction when the distance value extracted from storage is within a predetermined range of distances from the electronic device (1600) to the input means (1700).

8. The electronic device of claim 7, wherein the transceiver is configured to receive the packet periodically from the input means (1700).

9. The electronic device of claim 7, wherein the communication module (1612) is configured to communicate with the input means (1700) using a short-range communication.

10. The electronic device of claim 8, **characterized in that** the processor unit (1612) is further configured to analyze the signal strength of the received packet from the input means (1700), fetch the table in which respective distances to the input means (1700) is arranged based on the received signal 15 strength, and extract from the table the distance to the input means by comparing the analyzed signal strength with values of the table.

11. The electronic device of claim 7, wherein **characterized in that** the processor unit (1620) is further configured to check a distance value which is the distance from the electronic device (1600) to the input means (1700), and to determine whether the extracted distance value from the storage table of the input means (1700) to the electronic device (1600) falls within the checked distance value, and
when the extracted distance value from the storage of the input means (1600) to the electronic device (1600) exceeds the checked predetermined distance value, the communication module (1612) sends to the input means (1700) the signal comprising a payment lock instruction.

**Patentansprüche**

1. Betriebsverfahren eines elektronisches Gerätes (101), das Folgendes umfasst:

Empfangen eines Paketes durch das elektronische Gerät (101), das periodisch von einem Eingabemittel (102) gesendet wird, zum Eingeben von Informationen in das elektronische Gerät, wobei das Eingabemittel eine Zahlungsfunktion umfasst;
Ermitteln eines Abstandes vom elektronischen Gerät (101) zum Eingabemittel (102) basierend auf Vergleichen eines Wertes einer Signalempfangsstärke des empfangenen Paketes mit Werten von Signalempfangsstärke in Speicher und Extrahieren eines Abstandswertes, der einer passenden Signalstärke entspricht, aus Speicher;
Senden eines Bestätigungssignals (ACK-Signals) durch das elektronische Gerät (101) zum Eingabemittel (102), wenn der Abstandswert zwischen dem Eingabemittel (102) und dem elektronischen Gerät (101) innerhalb eines vorgegebenen Bereiches von Abständen ist, die aus Speicher extrahiert worden sind, wobei das ACK-Signal, das durch das elektronische Gerät (101) gesendet wird, einen Zahlungssperrbefehl umfasst, wenn der Abstandswert, der aus Speicher extrahiert worden ist, innerhalb des vorgegebenen Bereiches von Abständen vom elektronischen Gerät (101) zum Eingabemittel (102) ist;

Detektieren, dass das Eingabemittel (102) in einer voreingestellten Position des elektronischen Gerätes (101) angebracht ist oder auf dieses in einem voreingestellten Gebiet des elektronischen Gerätes (101) zugegriffen wird;

Zugreifen durch das elektronische Gerät (101) auf das Eingabemittel (102) über Nahbereichskommunikation;

Detektieren durch das elektronische Gerät (101), dass das Eingabemittel (102) eine Zahlungsfunktion gesperrt hat; und

Senden eines Signals zum Eingabemittel (102), das einen Befehl umfasst, die Zahlung zu entsperren, wobei das Zugreifen auf das Eingabemittel (102) durch das elektronische Gerät (101) über Nahbereichskommunikation Empfangen des Paketes vom Eingabemittel (102) durch das elektronische Gerät (101), Analysieren von ID-Informationen im empfangenen Paket und Bestätigen durch das elektronische Gerät (101) beinhaltet, dass die analysierten ID-Informationen mit ID-Informationen des Eingabemittels (102) übereinstimmen und dass das Eingabemittel (102) mit einem voreingestellten Eingabemittel übereinstimmt.

2. Betriebsverfahren nach Anspruch 1, das ferner Folgendes umfasst:

selbstständiges Löschen von Zahlungsinformationen durch das Eingabemittel (102), wenn durch das Eingabemittel (102) ermittelt wird, dass der Abstandswert zwischen dem elektronischen Gerät (101) und Eingabemittel (102) einen Kommunikationsbereich dazwischen überschreitet.

3. Betriebsverfahren nach Anspruch 1, wobei das Ermitteln des Abstandes vom elektronischen Gerät (101) zum Eingabemittel (102) basierend auf der Signalempfangsstärke des Paketes Folgendes umfasst:

Analysieren der Signalempfangsstärke des Paketes durch das elektronische Gerät (101);

Abrufen einer Tabelle aus Speicher durch das elektronische Gerät (101), die jeweilige Abstände zum Eingabemittel (102) basierend auf einer zugeordneten Signalempfangsstärke anordnet; und

Extrahieren des Abstandswertes aus der Tabelle, der einen Abstand vom elektronischen Gerät (101) zum Eingabemittel (102) umfasst, basierend auf einem Vergleich der analysierten Signalempfangsstärke mit Abstandswerten der Tabelle.

4. Betriebsverfahren nach Anspruch 1, wobei Senden des ACK-Signals durch das elektronische Gerät (101) zum Eingabemittel (102) gemäß dem Abstandswert zwischen dem Eingabemittel und dem elektronischen Gerät, der aus Speicher extrahiert worden ist, Folgendes umfasst:

Prüfen des Abstandes vom elektronischen Gerät (101) zum Eingabemittel (102);

Ermitteln, ob der Abstandswert zwischen dem elektronischen Gerät (101) und dem Eingabemittel (102), der aus Speicher extrahiert worden ist, in den geprüften Abstandswert vom elektronischen Gerät (101) zum Eingabemittel (102) fällt; und

wenn der Abstandswert zwischen dem elektronischen Gerät (101) und dem Eingabemittel (102), der aus Speicher extrahiert worden ist, den geprüften Abstandswert vom elektronischen Gerät (101) zum Eingabemittel (102) überschreitet, Senden des ACK-Signals zum Eingabemittel (102) mit dem Zahlungssperrbefehl.

5. Betriebsverfahren nach Anspruch 4, das ferner Folgendes umfasst:

wenn der Abstandswert zwischen dem elektronischen Gerät (101) und dem Eingabemittel (102), der aus Speicher extrahiert worden ist, in den geprüften Abstandswert fällt, Senden eines Bestätigungssignals (ACK-Signals) zum Eingabemittel (102), das dem Paket entspricht, das vom Eingabemittel (102) empfangen worden ist, unter Verwendung des ACK-Signals.

6. Betriebsverfahren nach Anspruch 1, das ferner Folgendes umfasst:

Detektieren durch das elektronische Gerät (101), dass das Eingabemittel (102) Zahlungsinformationen gelöscht hat;

Empfangen persönlicher Benutzerinformationen durch das elektronische Gerät (101), um die Zahlungsinformationen wiederherzustellen, die durch das Eingabemittel (102) gelöscht worden sind; und

wenn die empfangenen persönlichen Benutzerinformationen mit voreingestellten Informationen übereinstimmen, Senden eines Signals, das einen Transaktionsaktivierungsbefehl umfasst, durch das elektronische Gerät (101) zum Eingabemittel (102).

**7.** Elektronisches Gerät (1600), das Folgendes umfasst:

ein Kommunikationsmodul (1612), das einen Sendeempfänger beinhaltet, der konfiguriert ist, ein Paket zu empfangen, das von einem Eingabemittel (1700) gesendet worden ist, und zum Eingabemittel (1700) ein Bestätigungssignal (ACK-Signal) gemäß einem ermittelten Abstand des elektronischen Gerätes (1600) vom Eingabemittel (1700) zu senden, und

eine Prozessoreinheit (1620), die konfiguriert ist, aus Speicher den Abstandswert des elektronischen Gerätes (1600) zum Eingabemittel (1700) basierend auf einer Signalstärke des empfangenen Paketes zu extrahieren, zu detektieren, dass das Eingabemittel (102) in einer voreingestellten Position des elektronischen Gerätes (101) angebracht ist oder auf dieses in einem voreingestellten Gebiet des elektronischen Gerätes (101) zugegriffen wird, auf das Eingabemittel (102) über Nahbereichskommunikation zuzugreifen, zu detektieren, dass das Eingabemittel (102) eine Zahlungsfunktion gesperrt hat, und ein Signal zum Eingabemittel (102) zu senden, das einen Befehl umfasst, die Zahlung zu entsperren;

wobei der Zugriff auf das Eingabemittel (102) über Nahbereichskommunikation Empfangen des Paketes vom Eingabemittel (102) durch das elektronische Gerät (101), Analysieren von ID-Informationen im empfangenen Paket und Bestätigen beinhaltet, dass die analysierten ID-Informationen mit ID-Informationen des Eingabemittels (102) übereinstimmen und dass das Eingabemittel (102) mit einem voreingestellten Eingabemittel übereinstimmt, und

wobei das Bestätigungssignal (ACK-Signal), das durch das Kommunikationsmodul (1612) gesendet wird, einen Zahlungssperrbefehl umfasst, wenn der Abstandswert, der aus Speicher extrahiert worden ist, innerhalb eines vorgegebenen Bereiches von Abständen vom elektronischen Gerät (1600) zum Eingabemittel (1700) ist.

**8.** Elektronisches Gerät nach Anspruch 7,
wobei der Sendeempfänger konfiguriert ist, das Paket periodisch vom Eingabemittel (1700) zu empfangen.

**9.** Elektronisches Gerät nach Anspruch 7, wobei das Kommunikationsmodul (1612) konfiguriert ist, mit dem Eingabemittel (1700) unter Verwendung einer Nahbereichskommunikation zu kommunizieren.

**10.** Elektronisches Gerät nach Anspruch 8, **dadurch gekennzeichnet, dass** die Prozessoreinheit (1612) ferner konfiguriert ist, die Signalstärke des empfangenen Paketes vom Eingabemittel (1700) zu analysieren, die Tabelle abzurufen, in der jeweilige Abstände zum Eingabemittel (1700) basierend auf der empfangenen Signalstärke angeordnet sind, und aus der Tabelle den Abstand zum Eingabemittel durch Vergleichen der analysierten Signalstärke mit Werten der Tabelle zu extrahieren.

**11.** Elektronisches Gerät nach Anspruch 7, wobei **dadurch gekennzeichnet, dass** die Prozessoreinheit (1620) ferner konfiguriert ist, einen Abstandswert zu prüfen, der der Abstand vom elektronischen Gerät (1600) zum Eingabemittel (1700) ist, und zu ermitteln, ob der extrahierte Abstandswert aus der Speichertabelle des Eingabemittels (1700) zum elektronischen Gerät (1600) in den geprüften Abstandswert fällt, und

dass, wenn der extrahierte Abstandswert aus dem Speicher des Eingabemittels (1600) zum elektronischen Gerät (1600) den geprüften vorgegebenen Abstandswert überschreitet, das Kommunikationsmodul (1612) zum Eingabemittel (1700) das Signal sendet, das einen Zahlungssperrbefehl umfasst.

**Revendications**

**1.** Procédé de fonctionnement d'un dispositif électronique (101), comprenant :

la réception, par le dispositif électronique (101), d'un paquet transmis périodiquement depuis un moyen d'entrée (102) pour entrer des informations dans le dispositif électronique, dans lequel le moyen d'entrée comprend une fonction de paiement ;

la détermination d'une distance du dispositif électronique (101) au moyen d'entrée (102) sur la base de la comparaison d'une valeur de force de réception de signal du paquet reçu à des valeurs de force de réception de signal dans une mémoire et l'extraction, depuis la mémoire, d'une valeur de distance correspondant à une force de signal correspondante ;

l'envoi d'un signal d'accusé de réception (ACK) par le dispositif électronique (101) au moyen d'entrée (102) lorsque la valeur de distance entre le moyen d'entrée (102) et le dispositif électronique (101) est à l'intérieur d'une plage prédéterminée de distances extraites de la mémoire, dans lequel le signal ACK envoyé par le dispositif électronique (101) comprend une instruction de verrouillage de paiement lorsque la valeur de distance

extraite de la mémoire est à l'intérieur de la plage prédéterminée de distances du dispositif électronique (101) au moyen d'entrée (102) ;

la détection que le moyen d'entrée (102) est monté à une position préréglée du dispositif électronique (101) ou accédé dans une région préréglée du dispositif électronique (101) ;

l'accès, par le dispositif électronique (101), au moyen d'entrée (102) par l'intermédiaire d'une communication de courte portée ;

la détection, par le dispositif électronique (101), que le moyen d'entrée (102) a verrouillé une fonction de paiement ; et

l'envoi, au moyen d'entrée (102), d'un signal comprenant une instruction pour déverrouiller le paiement, dans lequel l'accès au moyen d'entrée (102) par le dispositif électronique (101) par l'intermédiaire d'une communication de courte portée comprend la réception, par le dispositif électronique (101), du paquet en provenance du moyen d'entrée (102), l'analyse d'informations d'identification dans le paquet reçu, et la confirmation, par le dispositif électronique (101), que les informations d'identification analysées correspondent à des informations d'identification du moyen d'entrée (102), et que le moyen d'entrée (102) correspond à un moyen d'entrée préréglé.

2. Procédé de fonctionnement selon la revendication 1, comprenant en outre :

la suppression autonome d'informations de paiement par le moyen d'entrée (102) s'il est déterminé, par le moyen d'entrée (102), que la valeur de distance entre le dispositif électronique (101) et le moyen d'entrée (102) dépasse une portée de communication entre eux.

3. Procédé de fonctionnement selon la revendication 1, dans lequel la détermination de la distance du dispositif électronique (101) au moyen d'entrée (102) sur la base de la force de réception de signal du paquet comprend :

l'analyse, par le dispositif électronique (101), de la force de réception de signal du paquet ;

la consultation, par le dispositif électronique (101), d'un tableau dans la mémoire qui agence des distances respectives au moyen d'entrée (102) sur la base d'une force de réception de signal associée ; et

l'extraction, depuis le tableau, de la valeur de distance comprenant une distance du dispositif électronique (101) au moyen d'entrée (102) sur la base d'une comparaison de la force de réception de signal analysée à des valeurs de distance du tableau.

4. Procédé de fonctionnement selon la revendication 1, dans lequel l'envoi du signal ACK par le dispositif électronique (101) au moyen d'entrée (102) en fonction de la valeur de distance, extraite de la mémoire, entre le moyen d'entrée et le dispositif électronique comprend :

le contrôle de la distance du dispositif électronique (101) au moyen d'entrée (102) ;

la détermination si la valeur de distance, extraite de la mémoire, entre le dispositif électronique (101) et le moyen d'entrée (102) est inférieure ou égale à la valeur de distance contrôlée du dispositif électronique (101) au moyen d'entrée (102) ; et

lorsque la valeur de distance, extraite de la mémoire, entre le dispositif électronique (101) et le moyen d'entrée (102) dépasse la valeur de distance contrôlée du dispositif électronique (101) au moyen d'entrée (102), l'envoi du signal ACK au moyen d'entrée (102) avec l'instruction de verrouillage de paiement.

5. Procédé de fonctionnement selon la revendication 4, comprenant en outre lorsque la valeur de distance, extraite de la mémoire, entre le dispositif électronique (101) et le moyen d' entrée (102) est inférieure ou égale à la valeur de distance contrôlée, l'envoi d'un signal d'accusé de réception (ACK) au moyen d'entrée (102) correspondant au paquet reçu en provenance du moyen d'entrée (102), par l'utilisation du signal ACK.

6. Procédé de fonctionnement selon la revendication 1, comprenant en outre :

la détection, par le dispositif électronique (101), que le moyen d'entrée (102) a supprimé des informations de paiement ;

la réception, par le dispositif électronique (101), d'informations personnelles d'utilisateur pour restaurer les informations de paiement supprimées par le moyen d'entrée (102) ; et

lorsque les informations personnelles d'utilisateur reçues correspondent à des informations préréglées, l'envoi, par le dispositif électronique (101), au moyen d'entrée (102), d'un signal comprenant une instruction d'activation de transaction.

**7.** Dispositif électronique (1600) comprenant :

un module de communication (1612) comprenant un émetteur-récepteur configuré pour recevoir un paquet transmis en provenance d'un moyen d'entrée (1700) et transmettre, au moyen d'entrée (1700), un signal d'accusé de réception (ACK) en fonction d'une distance déterminée du dispositif électronique (1600) depuis le moyen d'entrée (1700), et

une unité de traitement (1620) configurée pour extraire, depuis une mémoire, la valeur de distance du dispositif électronique (1600) au moyen d'entrée (1700) sur la base d'une force de signal du paquet reçu, détecter que le moyen d'entrée (102) est monté à une position préréglée du dispositif électronique (101) ou accédé dans une région préréglée du dispositif électronique (101), accéder au moyen d'entrée (102) par l'intermédiaire d'une communication de courte portée, détecter que le moyen d'entrée (102) a verrouillé une fonction de paiement, et envoyer, au moyen d'entrée (102), un signal comprenant une instruction pour déverrouiller le paiement ;

dans lequel l'accès au moyen d'entrée (102) par l'intermédiaire d'une communication de courte portée comprend la réception, par le dispositif électronique (101), du paquet en provenance du moyen d'entrée (102), l'analyse d'informations d'identification dans le paquet reçu, et la confirmation que les informations d'identification analysées correspondent à des informations d'identification du moyen d'entrée (102), et que le moyen d'entrée (102) correspond à un moyen d'entrée préréglé, et

dans lequel le signal d'accusé de réception (ACK) transmis par le module de communication (1612) comprend une instruction de verrouillage de paiement lorsque la valeur de distance extraite de la mémoire est à l'intérieur d'une plage prédéterminée de distances du dispositif électronique (1600) au moyen d'entrée (1700).

**8.** Dispositif électronique selon la revendication 7, dans lequel l'émetteur-récepteur est configuré pour recevoir périodiquement le paquet en provenance du moyen d'entrée (1700).

**9.** Dispositif électronique selon la revendication 7, dans lequel le module de communication (1612) est configuré pour communiquer avec le moyen d'entrée (1700) en utilisant une communication de courte portée.

**10.** Dispositif électronique selon la revendication 8, **caractérisé en ce que** l'unité de traitement (1612) est en outre configurée pour effectuer l'analyse de la force de signal du paquet reçu en provenance du moyen d'entrée (1700), la consultation du tableau dans lequel des distances respectives au moyen d'entrée (1700) sont agencées sur la base de la force du signal reçu, et l'extraction, depuis le tableau, de la distance au moyen d'entrée par la comparaison de la force de signal analysée à des valeurs du tableau.

**11.** Dispositif électronique selon la revendication 7, **caractérisé en ce que** l'unité de traitement (1620) est en outre configurée pour contrôler une valeur de distance qui est la distance du dispositif électronique (1600) au moyen d'entrée (1700), et déterminer si la valeur de distance, extraite du tableau de la mémoire, du moyen d'entrée (1700) au dispositif électronique (1600) est inférieure ou égale à la valeur de distance contrôlée, et

lorsque la valeur de distance, extraite de la mémoire, du moyen d'entrée (1600) au dispositif électronique (1600) dépasse la valeur de distance prédéterminée contrôlée, le module de communication (1612) envoie, au moyen d'entrée (1700), le signal comprenant une instruction de verrouillage de paiement.

DELETE PAYMENT
INFORMATION

ACTIVATE
PAYMENT LOCK

~105

~103

~104

~101

~102

FIG.1

202

201

BLE SCANNING

BLE
ADVERTIZING

FIG.2

R₁(301)

R₂(302)

R₃(303)

R₄(304)

R₅(305)

FIG.3

PLEASE SELECT THE
DISTANCE TO THE INPUT
MEANS

DISTANCE
TO THE INPUT MEANS
: 0M

0m                    50m

Save        Cancel

FIG.4A

PLEASE SELECT THE
DISTANCE TO THE INPUT
MEANS

DISTANCE
TO THE INPUT MEANS
: 10m

0m                    50m

Save        Cancel

FIG.4B

PLEASE SELECT THE
DISTANCE TO THE INPUT
MEANS

DISTANCE
TO THE INPUT MEANS
: 10m

0m                    10m

Save        Cancel

FIG.4C

PLEASE ENTER THE
PAYMENT FUNCTION
CONTROL TIME OF THE
INPUT MEANS

FIRST TIME

SECOND TIME

FIG.5A

PLEASE SELECT
THE FIRST TIME(THE
PAYMENT LOCK TIME)

20minutes

FIG.5B

PLEASE ENTER THE
PAYMENT FUNCTION
CONTROL TIME OF THE
INPUT MEANS

FIRST TIME

SECOND TIME

FIG.5C

PLEASE SELECT THE
SECOND TIME (THE
PAYMENT INFORMATION
DELETION TIME)

60minutes

FIG.5D

FIG.6A

PLEASE SELECT THE LOSS CONDITION OF THE INPUT MEANS

FIRST MODE (distance condition)

SECOND MODE (time condition)

FIG.6B

DO YOU LIKE TO SELECT THE FIRST MODE (DISTANCE CONDITION) AS THE INPUT MEANS LOSS CONDITION?

DISTANCE TO THE INPUT MEANS: 10m

YES    NO

FIG.6C

PLEASE SELECT THE LOSS CONDITION OF THE INPUT MEANS

FIRST MODE (distance condition)

SECOND MODE (time condition)

FIG.6D

DO YOU LIKE TO SELECT THE SECOND MODE (TIME CONDITION) AS THE INPUT MEANS LOSS CONDITION?

FIRST TIME : 20 minutes
SECOND TIME : 60 minutes

YES    NO

FIG.7

FIG.8

FIG.9A

FIG.9B

FIG.9C

FIG.9D

FIG.10A

FIG.10B

START

PERIODICALLY RECEIVE PACKET
FROM THE INPUT MEANS  ～1101

DETERMINE DISTANCE TO THE
INPUT MEANS BY ANALYZING
PACKET RECEPTION STRENGTH
AND EXTRACTING DISTANCE  ～1102
VALUE FROM STORAGE
CORRESPONDING TO RECEPTION
STRENGTH

1103
THE
EXTRACTED
DISTANCE OF INPUT MEANS     NO
EXCEEDS PRESET
DISTANCE?

1105
SEND ACK SIGNAL
CORRESPONDING TO PACKET
RECEIVED FROM THE INPUT
MEANS, USING SIGNAL TO SEND
TO THE INPUT MEANS

YES     1104
SEND SIGNAL INCLUDING
PAYMENT LOCK INSTRUCTION
TO THE INPUT MEANS

1106
THE
INPUT MEANS
NO     IS MOUNTED AT PRESET
POSITION OR ACCESSED
IN  PRESET
REGION?

YES
ACCESS THE INPUT MEANS FOR
SHORT-RANGE COMMUNICATION  ～1107
WITH THE INPUT MEANS USING BLE

1108
THE
INPUT MEANS IS IN PAYMENT     NO
LOCK MODE?

1110
THE
INPUT MEANS     NO
DELETES PAYMENT
INFORMATION?

YES     1109
SEND SIGNAL INCLUDING
INSTRUCTION TO UNLOCK PAYMENT
FUNCTION, TO THE INPUT MEANS

YES     1111
SEND SIGNAL INCLUDING
INSTRUCTION TO UNLOCK PAYMENT
FUNCTION, TO THE INPUT MEANS

END

FIG.11

39

START

PERIODICALLY SEND PACKET TO ELECTRONIC DEVICE — 1201

RECEIVE ACK SIGNAL CORRESPONDING TO THE TRANSMITTED PACKET FROM ELECTRONIC DEVICE WITHIN PRESET TIME? — 1202

NO →

PRESET PAYMENT CONTROL MODE IS FIRST MODE? — 1204

NO →

TIME (T) COUNTED FROM NO ACK SIGNAL RECEPTION SATISFIES THE FOLLOWING EQUATION? — 1206

NO →

CONFIRM THAT TIME (T) COUNTED FROM NO ACK SIGNAL RECEPTION SATISFIES THE FOLLOWING EQUATION, AND DELETE PAYMENT INFORMATION — 1208

YES

LOCK PAYMENT FUNCTION WHEN THE RECEIVED ACK SIGNAL CONTAINS PAYMENT LOCK INSTRUCTION — 1203

YES

DELETE THE STORED PAYMENT INFORMATION — 1205

YES

LOCK PAYMENT FUNCTION — 1207

RECEIVE ACK SIGNAL CORRESPONDING TO THE TRANSMITTED PACKET FROMELECTRONIC DEVICE WITHIN PRESET TIME? — 1209

YES

1210

NO

END

FIG.12A

1209

1209

ACCESS ELECTRONIC DEVICE FOR SHORT−RANGE
COMMUNICATION WITH ELECTRONIC DEVICE USING
BLE, AND RECEIVE MESSAGE INDICATING PRESET
INPUT DEVICE MATCH FROM ELECTRONIC DEVICE — 1210

RECEIVE FROM ELECTRONIC DEVICE, SIGNAL
INCLUDING INSTRUCTION TO UNLOCK PAYMENT,
OR SIGNAL INCLUDING TRANSACTION ACTIVATION
INSTRUCTION BY INPUTTING USER'S PERSONAL
INFORMATION TO ELECTRONIC DEVICE — 1211

END

FIG.12B

START

PERIODICALLY RECEIVE PACKET
FROM INPUT MEANS                    ∿1301

DETERMINE DISTANCE TO THE INPUT
MEANS BASED ON PACKET              ∿1302
RECEPTION STRENGTH

SEND SIGNAL TO THE INPUT MEANS
ACCORDING TO THE EXTRACTED
INPUT MEANS DISTANCE               ∿1303
AND THE RECEIVED PACKET

END

# FIG.13A

MEANS FOR PERIODICALLY RECEIVING
PACKET FROM THE INPUT MEANS,
AND SENDING SIGNAL TO THE INPUT
MEANS ACCORDING TO THE EXTRACTED
INPUT MEANS DISTANCE
AND THE RECEIVED PACKET — 1304

MEANS FOR DETERMING DISTANCE
TO THE INPUT MEANS BASED ON PACKET
RECEPTION STRENGTH — 1305

# FIG.13B

FIG.14A

MEANS FOR PERIODICALLY SENDING
PACKET TO ELECTRONIC DEVICE ~1404

MEANS FOR DETERMINING WHETHER
SIGNAL CORRESPONDING TO THE SENT
PACKET IS RECEIVED FROM ELECTRONIC ~1405
DEVICE, AND CONTROLLING PAYMENT
FUNCTION BASED ON SIGNAL RECEPTION

FIG.14B

FIG.15

FIG.16

FIG.17

**EP 2 731 066 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 101121586 B1
- US 2012209732 A1
- US 7257374 B1
- WO 2006118122 A1
- US 5942985 A
- WO 2007109574 A2

### Non-patent literature cited in the description

- **LING PEI et al.** An Inquiry-based Bluetooth indoor positioning approach for the Finnish pavilion at Shanghai World Expo 2010. *Position location and navigation symposium (PLANS), 2010 1EEE/ION, Piscataway, NJ, USA,* 04 May 2010, ISBN 978-1-4244-5036-7, 1002-1009